# EUROPÄISCHE PATENTANMELDUNG

(11) **EP 3 904 152 A1**
(43) Veröffentlichungstag der Anmeldung: **03.11.2021**
(21) Anmeldenummer: 20171801.2
(22) Anmeldetag: 28.04.2020
(51) Int. Cl.: B60L 58/13, B60L 53/67, B60L 53/63, B60L 55/00, H02J 9/06, G07F 15/00, B60L 53/64, B60L 53/66, B60L 53/53, B60L 58/14, B60L 58/15

(54) **LADESTEUERUNG EINES FUHRPARKS**

(71) Anmelder: Wobben Properties GmbH, 26607 Aurich (DE)
(72) Erfinder: Brombach, Johannes, 13437 Berlin (DE); Sander, Aram, 10781 Berlin (DE)
(74) Vertreter: Eisenführ Speiser

(57) **Zusammenfassung**

Die Erfindung betrifft ein Verfahren zum Bereitstellen elektrischer Austauschleistung (238) mehrerer Elektrofahrzeuge (351-355) eines Fuhrparks (340) aus Elektrofahrzeugen, zum Einspeisen in ein elektrisches Versorgungsnetz (344), oder Entnehmen aus dem elektrischen Versorgungsnetz (344), mittels einer Ladeinfrastruktur (342) des Fuhrparks, wobei eine positive Austauschleistung eine von dem Fuhrpark (340) aus dem elektrischen Versorgungsnetz (344) entnommene elektrische Leistung bezeichnet und eine negative Austauschleistung eine von dem Fuhrpark (340) in das elektrische Versorgungsnetz (344) eingespeiste elektrische Leistung bezeichnet, und wobei jedes Elektrofahrzeug (351-355) einen elektrischen Speicher (371-375) mit einem veränderlichen Ladezustand aufweist, und die Summe der veränderlichen Ladezustände der Elektrofahrzeuge (351-355) des Fuhrparks (340), und ggf. weiterer veränderlicher Ladezustände weiterer Speicher, einen veränderlichen Summenladezustand bildet, wobei für einen Bereitstellungszeitraum (T_{B}) ein Ladezustandsbereich (226) bestimmt wird, der einen Betriebsbereich aufspannt, in dem der Summenladezustand (236) liegen soll, wobei der Ladezustandsbereich (226) gekennzeichnet ist durch eine zeitabhängige Obergrenze (232), die zeitabhängig Maximalwerte für den Summenladezustand vorgibt, die nicht überschritten werden sollen, und durch eine zeitabhängige Untergrenze (234), die zeitabhängig Minimalwerte für den Summenladezustand vorgibt, die nicht unterschritten werden sollen, und wobei der Ladezustandsbereich (226) in Abhängigkeit der Ladezustände der Elektrofahrzeuge (351-355) bestimmt wird, und wobei in dem Bereitstellungszeitraum (T_{B}) die elektrische Austauschleistung so gesteuert wird, dass der Summenladezustand den Ladezustandsbereich nicht verlässt.

## Beschreibung

Die vorliegende Erfindung betrifft ein Verfahren zum Bereitstellen elektrischer Austauschleistung mehrerer Elektrofahrzeuge eines Fuhrparks aus Elektrofahrzeugen, zum Einspeisen in ein elektrisches Versorgungsnetz oder zum Entnehmen aus dem elektrischen Versorgungsnetz mittels einer Ladeinfrastruktur des Fuhrparks. Die Erfindung betrifft außerdem eine Ladeinfrastruktur für mehrere Elektrofahrzeuge eines Fuhrparks zum Ausführen eines solchen Verfahrens.

Es gibt eine wachsende Zahl an Elektrofahrzeugen, also eine Zunahme der sogenannten E-Mobilität. Es gibt schon seit langem verschiedene Ideen, die E-Mobilität auch für Netzzwecke nutzbar zu machen, also insbesondere für eine Stützung des elektrischen Versorgungsnetzes und/oder zum kurzfristigen und temporären Bereitstellen zusätzlicher elektrischer Leistung bei entsprechenden Bedarfsspitzen im elektrischen Versorgungsnetz.

Solche Technologien sind unter dem Begriff "vehicle to grid" zusammengefasst. Eine solche Unterstützung des elektrischen Versorgungsnetzes mittels Elektrofahrzeugen ist beispielsweise beschrieben in der internationalen Anmeldung WO 03/062018 A2.

Solches Stützen des elektrischen Versorgungsnetzes, einschließlich dem Bereitstellen solcher temporärer Leistung, wird auch als Systemdienstleistung, nämlich Systemdienstleistung für das elektrische Versorgungsnetz, bezeichnet. Für viele Systemdienstleistungen in diesem Sinne wird aber eine sehr hohe Verfügbarkeit vorausgesetzt. Wenn also beispielsweise eine Leistung zum Stützen des elektrischen Versorgungsnetzes angeboten wird, muss die auch durchgängig verfügbar sein, sodass das elektrische Versorgungsnetz, wenn es eine solche Leistung anfordern will, diese auch zur Verfügung hat.

Für Batterien von Elektrofahrzeugen bedeutet das, dass diese nur dann netzdienlich arbeiten können, wenn diese zum richtigen Zeitpunkt einen definierten Ladezustand aufweisen und mit einem Ladepunkt verbunden sind. Die entsprechenden Elektrofahrzeuge müssen also eine entsprechende Speicherenergie verfügbar haben, die auch bekannt sein sollte, und das Elektrofahrzeug muss mit dem elektrischen Versorgungsnetz verbunden sein, darf in dem Moment also nicht im Fahrbetrieb sein.

Bei Pkws kann eine solche hohe Verfügbarkeit regelmäßig nicht sichergestellt werden. Aber auch bei elektrischen Kraftfahrzeugen im Logistiksektor, deren Fahrtätigkeit und Zeiten grundsätzlich besser bekannt sind, kann es zu Abweichungen im Fahrplan kommen, sodass Ladezustand und Zeitpunkt, bei dem auf diesen Speicher zugegriffen werden kann, variieren.

Die Einbringung eines einzelnen Fahrzeugspeichers für solche Systemdienstleistungen, was auch als Vermarktung eines einzelnen Fahrzeugspeichers genutzt werden könnte, scheint daher nicht möglich oder zumindest kaum praktikabel zu sein.

Eine Möglichkeit, das Problem zu adressieren, kann darin bestehen, viele Ladepunkte, an denen also Elektrofahrzeuge und damit elektrische Speicher bzw. Batterien angeschlossen werden können, über eine große räumliche Ausdehnung zu aggregieren, um über die Aggregation die benötigte Sicherheit zur Bereitstellung von Systemdienstleistungen zu erreichen. Durch die große räumliche Verteilung und die Aggregation ist aber eine lokale Wirkung, insbesondere eine lokale oder lokal wirkende Systemdienstleistung, kaum möglich und nur ein kleiner Teil des Speichers in den Fahrzeugen kann bei einer gegebenen Verfügbarkeitsanforderung tatsächlich genutzt werden.

Dennoch wurde erkannt, dass grundsätzlich aber viel Speicherkapazität von Elektrofahrzeugen vorhanden sein kann. Es wäre daherwünschenswert, diese auch für Systemdienstleistungen zu nutzen.

Der Erfindung liegt somit die Aufgabe zugrunde, zumindest eines der oben genannten Probleme zu adressieren. Insbesondere soll eine Lösung geschaffen werden, die für eine möglichst große Gruppe elektrischer Speicher von Elektrofahrzeugen erreicht, dass wenigstens eine Systemdienstleistung, insbesondere eine Netzstützung und/oder Bereitstellung einer Austauschleistung in nennenswerter Höhe, insbesondere höher als für eine solche Gruppe elektrischer Speicher bisher bekannt, zuverlässig angeboten werden kann. Insbesondere soll für eine solche Gruppe elektrischer Speicher eine Aggregationsmethode vorgeschlagen oder verbessert werden. Zumindest soll zu bisher bekannten Lösungen eine Alternative vorgeschlagen werden.

Erfindungsgemäß wird ein Verfahren gemäß Anspruch 1 vorgeschlagen.

Das Verfahren betrifft somit das Bereitstellen elektrischer Austauschleistung mehrerer Elektrofahrzeuge eines Fuhrparks aus Elektrofahrzeugen, zum Einspeisen in ein elektrisches Versorgungsnetz, oder zum Entnehmen aus dem elektrischen Versorgungsnetz, mittels einer Ladeinfrastruktur des Fuhrparks. Der Fuhrpark kann ein Fuhrpark aus Elektrobussen eines Verkehrsbetriebs beispielsweise für den öffentlichen Personennahverkehr sein. Der Fuhrpark kann dann viele Elektrobusse umfassen, es kommen aber auch andere Fahrzeuge in Betracht. Der Fuhrpark kann auch ein Fuhrpark von Elektrofahrzeugen eines Zustellbetriebs oder Auslieferungsbetriebs sein. Es können auch mehrere solcher Gruppen von Elektrofahrzeugen als Unterfuhrparks verstanden werden, sodass mehrere Unterfuhrparks den Fuhrpark aus Elektrofahrzeugen bilden. Der Fuhrpark aus Elektrofahrzeugen kann dann die beispielhaft genannten Elektrobusse des Verkehrsbetriebs umfassen sowie die Fahrzeuge, wie beispielsweise Lkws oder Transporter des exemplarisch genannten Auslieferungsdienstes oder Zustelldienstes.

Jedenfalls sind mehrere Elektrofahrzeuge vorhanden, die mittels elektrischer Speicher fahren. Solange diese nicht fahren, besonders während der Nacht, können sie aufgeladen werden. Dazu können Ladepunkte vorgesehen sein, die auch als Ladeterminals bezeichnet werden können. An solchen Ladepunkten ist dann jeweils ein Elektrofahrzeug angeschlossen und kann geladen werden. Diese Ladepunkte zusammen sind in einer Ladeinfrastruktur zusammengefasst. Eine solche Ladeinfrastruktur kann besonders eine Ladesteuereinheit vorsehen, die das elektrische Laden der Elektrofahrzeuge mittels dieser vielen Ladepunkte koordiniert bzw. steuert.

Teil der Ladestruktur kann eine physikalische Verbindung mehrerer Ladepunkte untereinander sein. Die Ladeinfrastruktur kann sich auch aus mehreren verteilten Ladepunkten und/oder Ladepunktgruppen zusammensetzen, wobei solche Ladepunktgruppen oder gegebenenfalls sogar einzelne Ladepunkte jeweils für sich an das elektrische Versorgungsnetz angeschlossen sind. Dafür kann jeweils ein Netzanschlusspunkt vorgesehen sein. Es kann aber auch, besonders bei einem Betrieb, der einen besonders großen Fuhrpark mit vielen Elektrofahrzeugen aufweist, die alle lokal an einem Ort aufgeladen werden, ein einziger Netzverknüpfungspunkt vorgesehen sein, über den die Ladeinfrastruktur in das elektrische Versorgungsnetz einspeist.

Über diesen einen Netzanschlusspunkt oder mehrere Netzanschlusspunkte, je nachdem, wie die Ladeinfrastruktur ausgestaltet ist, kann die elektrische Austauschleistung in das elektrische Versorgungsnetz eingespeist werden oder aus dem elektrischen Versorgungsnetz entnommen werden. Gemäß einem anschaulichen Beispiel fahren die Elektrofahrzeuge abends jeweils zu einem Ladepunkt und werden dort die Nacht über geladen. Die Zeitdauer einer solchen Nacht ist dabei regelmäßig wesentlich länger als zum Laden der jeweiligen Elektrofahrzeuge, also zum Laden ihrer Speicher, benötigt würde. In der Zeit kann also abschnittsweise auch elektrische Leistung in das elektrische Versorgungsnetz eingespeist werden, auch wenn insgesamt die jeweiligen elektrischen Speicher aufgeladen werden sollen und dazu elektrische Leistung aus dem elektrischen Versorgungsnetz entnommen wird.

Die Austauschleistung kann somit positiv und negativ sein. Eine positive Austauschleistung bezeichnet eine von dem Fuhrpark aus dem elektrischen Versorgungsnetz entnommene elektrische Leistung. Eine negative Austauschleistung bezeichnet eine von dem Fuhrpark in das elektrische Versorgungsnetz eingespeiste elektrische Leistung. Das Vorzeichen der Austauschleistung ist somit aus Sicht des Ladens der elektrischen Speicher definiert.

Jedes Elektrofahrzeug hat somit einen elektrischen Speicher mit einem veränderlichen Ladezustand und die Summe der veränderlichen Ladezustände der Elektrofahrzeuge des Fuhrparks und gegebenenfalls weiterer veränderlicher Ladezustände weiterer Speicher bilden einen veränderlichen Summenladezustand. In dem Summenladezustand sind also alle Ladezustände der Elektrofahrzeuge zusammengefasst. Es kommt aber auch in Betracht, dass beispielsweise ein oder mehrere Ersatzspeicher, oder gezielt ein Speicher des Fuhrparks, der als Pufferspeicher dient, vorgesehen sind. Soweit diese elektrischen Speicher auch über wenigstens einen Ladepunkt angeschlossen sind, nämlich geladen und entladen werden können und dazu Austauschleistung mit dem elektrischen Versorgungsnetz austauschen können, können diese auch einen Beitrag zu dem vorgeschlagenen Verfahren leisten.

Es wird dann vorgeschlagen, dass für einen Bereitstellungszeitraum ein Ladezustandsbereich bestimmt wird, der einen Betriebsbereich aufspannt, in dem der Summenladezustand liegen soll. Dieser Ladezustandsbereich kann auch als Ladezustandsband oder einfach Band bezeichnet werden, das aber keine konstante Breite hat, sich aber über diesen Bereitstellungszeitraum erstreckt.

Dieser Ladezustandsbereich bzw. dieses Ladezustandsband ist im Wesentlichen durch eine zeitliche Obergrenze und eine zeitliche Untergrenze gekennzeichnet. Die zeitliche Obergrenze ist somit eine Grenze, also insbesondere eine zeitabhängige Linie in einem entsprechenden Diagramm, die zeitabhängig Maximalwerte für den Summenladezustand vorgibt, die nicht überschritten werden sollen. Der Ladezustandsbereich bzw. das Ladezustandsband liegt also unterhalb dieser zeitlichen Obergrenze.

Die zeitliche Untergrenze gibt zeitabhängige Minimalwerte für den Summenladezustand vor und diese Minimalwerte sollen nicht unterschritten werden. Der Ladezustandsbereich bzw. das Ladezustandsband liegt somit oberhalb dieser zeitabhängigen Untergrenze.

Weiter wird vorgeschlagen, dass der Ladezustandsbereich in Abhängigkeit von den Ladezuständen der Elektrofahrzeuge bestimmt wird. Besonders der Anfangswert oder Anfangsbereich des Ladezustandsbereichs bzw. des Ladezustandsbandes kann unmittelbar durch die Ladezustände der Elektrofahrzeuge zu Beginn des Bereitstellungszeitraums bestimmt werden. Der Ladezustandsbereich kann sich auch verändern, er kann also beispielsweise für den gesamten Bereitstellungszeitraum zunächst festgelegt werden, wobei diese Festlegung dann später noch variiert werden kann. Solche Variationen können ebenfalls von den Ladezuständen der Elektrofahrzeuge abhängen, bzw. von dem Summenladezustand.

Außerdem wird vorgeschlagen, dass in dem Bereitstellungszeitraum die elektrische Austauschleistung so gesteuert wird, dass der Summenladezustand den Ladezustandsbereich nicht verlässt. Der Ladezustandsbereich ist somit eine Vorgabe für den Summenladezustand. Innerhalb dieses Ladezustandsbereichs kann sich der Summenladezustand ändern. Dadurch ergibt sich eine Flexibilität beim Steuern der Austauschleistung. Wird beispielsweise zum Stützen des elektrischen Versorgungsnetzes kurzfristig eine negative Austauschleistung benötigt, soll also elektrische Leistung aus den elektrischen Speichern in das elektrische Versorgungsnetz eingespeist werden, so kann geprüft werden, wie sich dadurch der Summenladezustand verändert. Verändert er sich so, dass er in dem Ladezustandsbereich bleibt, so kann diese beispielhaft genannte Einspeisung elektrischer Leistung in das elektrische Versorgungsnetz grundsätzlich durchgeführt werden. Gegebenenfalls sind noch weitere Kriterien zu beachten, auf die weiter unten noch eingegangen wird.

Besonders kann hierdurch die Möglichkeit geschaffen werden, dass die gesamte Speicherkapazität all dieser elektrischen Speicher der Elektrofahrzeuge des Fuhrparks zum Stützen des elektrischen Versorgungsnetzes gemeinsam zur Verfügung steht. Durch die Vorgabe des Ladezustandsbereichs und dabei die Betrachtung des Summenladezustands und damit die Betrachtung bzw. Berücksichtigung aller Ladezustände der elektrischen Speicher des Fuhrparks kann ein vergleichsweise großer Leistungswert gesteuert werden. Dieser Wert kann so groß sein, dass es für den Betreiber des elektrischen Versorgungsnetzes sinnvoll ist, diesen gezielt zu berücksichtigen und gegebenenfalls auch gezielt Leistung anzufordern, die in diesem Rahmen bereitgestellt werden kann. Zu der Anforderung von Leistung seitens des elektrischen Versorgungsnetzes kann auch gehören, dass das elektrische Versorgungsnetz überschüssige Leistung kurzfristig abgeben will. Auch dafür können die elektrischen Speicher zur Verfügung stehen und diese von dem elektrischen Versorgungsnetz abgegebene Leistung kann dann von der Gesamtheit der elektrischen Speicher des Fuhrparks aufgenommen werden.

Das kann gemeinsam durch die Ladeinfrastruktur des Fuhrparks realisiert werden. Dabei können die elektrischen Speicher der Elektrofahrzeuge aber auch örtlich verteilt sein. Besonders kommt in Betracht, dass an einem Ort oder einer Stadt mehrere Unterfuhrparks örtlich verteilt sind, gleichwohl gemeinsam über die Ladeinfrastruktur, insbesondere mittels einer Ladesteuereinheit für diese Ladeinfrastruktur koordiniert wird. Aus Sicht eines elektrischen Versorgungsnetzes kann eine solche örtliche Verteilung dennoch als lokale Leistungsquelle oder -senke wirken, denn sind solche Unterfuhrparks an einem Ort lokal verteilt, kann das häufig bedeuten, dass sie lediglich wenige Kilometer auseinander angeordnet sind. Damit kann bei entsprechender Koordinierung dennoch eine lokale Stützung oder Unterstützung des elektrischen Versorgungsnetzes vorgenommen werden.

Das Vorgeben des Ladezustandsbereichs in dem Bereitstellungszeitraum unter Berücksichtigung des Summenladezustands gibt dafür den Rahmen vor. Dadurch kann eine Verlässlichkeit und gute Steuerbarkeit erreicht werden.

Durch diesen Ladezustandsbereich ist somit auch eine Planbarkeit erreichbar, in die auf einfache und effiziente Art und Weise alle elektrischen Speicher der Fahrzeuge des Fuhrparks eingebunden sind. Somit wird dieser Ladezustandsbereich vorzugsweise als Vorhersage bestimmt, beispielsweise einen Tag im Voraus, oder einen halben Tag im Voraus. Der Ladezustandsbereich kann dadurch auch einen Rahmen zur Energiebeschaffung bzw. Energieplanung geben. Schließlich sollen die elektrischen Speicher innerhalb dieses Bereitstellungszeitraums im Ergebnis auch geladen werden.

Dennoch kommt in Betracht und wird vorzugsweise vorgeschlagen, dass der Ladezustandsbereich auch im Betrieb verändert werden kann. Wird der Ladezustandsbereich als Vorhersage bestimmt, liegt somit der Bereitstellungszeitraum zunächst in der Zukunft. Erreicht dann die aktuelle Zeit den Bereitstellungszeitraum, so kann dieser abgearbeitet werden, die Austauschleistung kann dann also konkret so gesteuert werden, dass der Summenladezustand in dem Ladezustandsbereich liegt, also zwischen der zeitabhängigen Obergrenze und der zeitabhängigen Untergrenze liegt.

Während dieser Zeit kann der Ladezustandsbereich aber auch verändert werden. Für solche Veränderungen kann es verschiedene Gründe geben. Insbesondere eine Veränderung der tatsächlichen Gegebenheiten gegenüber denen für die Vorhersage angenommenen Gegebenheiten kommt dafür in Betracht. Z.B. kann ein Speicher ausfallen oder ein Temperatursturz zu einer Beeinträchtigung der Speicher führen.

Der Ladezustandsbereich kann auch abhängig von einem Fahrplan für die Elektrofahrzeuge erstellt werden, der beispielsweise beinhaltet, wann welche Elektrofahrzeuge laut Fahrplan zurückkehren sollen und jeweils an einem Ladepunkt angeschlossen werden und dadurch zur Bereitstellung der Austauschleistung beitragen können. Kehrt nun ein Elektrofahrzeug früher oder später zurück als dies laut Fahrplan vorgesehen war, so kann dies Einfluss auf den Ladezustandsbereich haben. Dieser Einfluss kann sich indirekt aus einem veränderten Ladezustand des jeweiligen Elektrofahrzeugs ergeben, aber auch indirekt aus der Zeit, zu der der elektrische Speicher verfügbar ist.

Das ist auch ein Beispiel für die Veränderbarkeit des Ladezustandsbereichs und weitere werden unten noch beschrieben werden. Jedenfalls kann der Ladezustandsbereich generell verändert werden, insbesondere adaptiv verändert werden, indem er adaptiv an Randbedingungen angepasst wird.

Diese gemeinsame Planung, bei der der Summenladezustand und der Ladezustandsbereich bestimmt werden, kann als eine Aggregation oder technische Aggregation besonders der aktuell verfügbaren Kapazitäten der elektrischen Speicher der Fahrzeuge des Fuhrparks angesehen bzw. bezeichnet werden.

Gemäß einer Ausführungsform wird vorgeschlagen, dass die technische Aggregation mit einer vordefinierten Verfügbarkeit gekennzeichnet und insbesondere auch als Information weiteregegeben wird. In eine solche technische Verfügbarkeit kann beispielsweise einfließen, wie groß die Ausfallwahrscheinlichkeit für einen Elektrospeicher ist und wie dadurch in Betrachtung aller Elektrospeicher eine Veränderung oder Unsicherheit des Ladezustandsbereichs betroffen ist.

Besonders wird vorgeschlagen, eine Verfügbarkeitsbetrachtung durchzuführen. In einer solchen Verfügbarkeitsbetrachtung fließen die Ladezustände und eine Ankunftsprognose mit einer Wahrscheinlichkeitsverteilung ein. Diese Wahrscheinlichkeitsverteilung spiegelt Unsicherheiten der Ankunftszeiten und der einzelnen Speicherzustände wider. Ein solcher Unsicherheitswert wird bei der Aggregierung benötigt, um eine Mindestverfügbarkeit der Speicher zu berechnen und sicherzustellen. Die Unsicherheit könnte der Hauptgrund dafür sein, dass bei einer notwendigen Verfügbarkeit der Summenladezustand kleiner ist, als die Prognose der Summe aller Ladezustände der elektrischen Speicher der Elektrofahrzeuge.

Die austauschbare Leistung, die durch das vorliegende Verfahren gesteuert wird, kann sich aus der technischen Aggregation ergeben, also der Zusammenfassung der Kapazitäten der elektrischen Speicher. Die austauschbare Leistung kann aber auch davon abhängen, inwieweit das elektrische Versorgungsnetz eine Begrenzung darstellt. Eine solche Begrenzung des elektrischen Versorgungsnetzes kann in einer Leistungsbegrenzung des verwendeten Netzanschlusspunktes liegen, sie kann aber auch insgesamt in der Übertragungsfähigkeit eines Netzabschnitts liegen. Bei Annahme einer festen Übertragungskapazität eines Abschnitts des elektrischen Versorgungsnetzes hängt dann die Frage, wie viel zusätzliche Austauschleistung über diesen betrachteten Netzabschnitt übertragen werden kann, auch davon ab, wie weit diese Grenze der Leistungsübertragung in dem Moment bereits ausgenutzt wird.

Die austauschbare Leistung hängt also auch davon ab, ob das elektrische Versorgungsnetz punktuell überlastet ist oder eine Lastgrenze erreicht. Auch die Kapazität der Ladepunkte, also ihre Ladeleistung ist relevant. Besonders ist zu beachten, dass der Ladezustandsbereich im Grunde einen Bereich verfügbarer Energie aufspannt, wohingegen die Austauschleistung eine Leistung betrifft, also Energie pro Zeit. Besonders die zeitabhängige Obergrenze sowie die zeitabhängige Untergrenze, die den Ladezustandsbereich kennzeichnen, hängen somit nicht nur von der Energie ab, die die elektrischen Speicher kumuliert noch abgeben und aufnehmen können, sondern auch von Leistungsgrenzen, also wie schnell diese Energie abgegeben bzw. aufgenommen werden kann.

Für die Aggregation ist dabei somit auch zu berücksichtigen, welche Speicher wie schnell Energie aufnehmen oder abgeben können. Diese Eigenschaft hängt nicht nur von den elektrischen Speichern als solche ab, sondern jeweils auch von den jeweiligen Randbedingungen, also besonders der übertragbaren oder umsetzbaren Leistung. Und das kann von dem Ladepunkt, dem Netzanschlusspunkt oder auch dem entsprechenden Abschnitt des elektrischen Versorgungsnetzes abhängen.

Liegen also, um ein einfaches Beispiel zu nehmen, zwei elektrische Speicher vor, die zu 50 % geladen sind und gleich groß sind, können die schneller den Energiewert von 100% eines Speichers abgeben oder aufnehmen als wenn nur ein elektrischer Speicher mit 100 % Ladung bzw. 100 % Entladung vorliegen würde.

Gemäß einer Ausführungsform wird vorgeschlagen, dass ein Startladepunkt des Ladezustandsbereichs prognostiziert wird, der bestimmt ist durch einen Anfangsladezustand des Summenladezustandes zu einem Startzeitpunkt. Er ist also durch den Anfangsladezustand und den Startzeitpunkt bestimmt. Von diesem Startladepunkt aus wird der Ladezustandsbereich aufgespannt. Der Startladepunkt kann auch als Bereich prognostiziert werden, sodass der Anfangsladezustand und/oder der Startzeitpunkt jeweils einen Bereich angeben. Der Bereich sollte aber klein sein, insbesondere sollte der prognostizierte Startzeitpunkt maximal einen Bereich von10% der Größe des Bereitstellungszeitraumes aufspannen und der Anfangsladezustand sollte maximal einen Bereich von 20% eines maximalen Summenladezustands aufspannen.

Als Prognose wird besonders vorgeschlagen, dass der Anfangsladezustand zu dem Startzeitpunkt prognostiziert wird. Hier wird besonders prognostiziert, welche Ladezustände die elektrischen Speicher zum Startzeitpunkt haben werden, und diese Werte können zum prognostizierten Anfangsladezustand, der nämlich den Anfangsladezustand des Summenladezustands bildet, aufsummiert werden.

Außerdem oder alternativ kann als Prognose für den Startladepunkt, oder als Teilprognose der Startzeitpunkt prognostiziert werden. Der Startzeitpunkt ist besonders der Zeitpunkt wenn alle Elektrofahrzeuge in der Ladeinfrastruktur angekommen sind, also insbesondere jeweils an einem Ladeterminal angeschlossen sind. Insoweit ist die Prognose des Startzeitpunktes eine Prognose der Ankunftszeiten der Elektrofahrzeuge. Für diese Prognose kann daher besonders ein Fahrplan der Elektrofahrzeuge berücksichtigt werden.

Eine Möglichkeit ist somit, dass der Startzeitpunkt ein prognostizierter Zeitpunkt ist, zu dem prognostiziert wird, dass alle Elektrofahrzeuge die Ladeinfrastruktur erreicht haben. Es kommt aber auch in Betracht, dass es ausreicht, wenn nicht alle Elektrofahrzeuge angekommen sind, sondern nur einige, insbesondere die meisten.

Eine weitere Möglichkeit ist somit, dass der Startzeitpunkt ein prognostizierter Zeitpunkt ist, zu dem ein vorbestimmter Teil der Elektrofahrzeige die Ladeinfrastruktur erreicht hat. Der vorbestimmte Teil kann bspw. als wenigstens 90% angegeben werden.

Besonders wenn unterschiedliche Elektrofahrzeuge zum Fuhrpark gehören, insbesondere mit unterschiedlich großen elektrischen Speichern, und/oder mit unterschiedlichen Ladezuständen, ist es vorteilhaft, ihren Ladezustand und/oder ihre Speicherkapazität als Maß zu nehmen, ob ausreichend Elektrofahrzeuge angekommen sind.

Eine weitere Möglichkeit ist somit, dass der Startzeitpunkt ein prognostizierter Zeitpunkt ist, zu dem so viele Elektrofahrzeuge die Ladeinfrastruktur erreicht haben, dass eine Summe ihrer Ladezustände einen vorgegebenen Mindestanfangswert des Summenladezustand erreicht haben, und eine Möglichkeit ist daher, dass der Startzeitpunkt ein prognostizierter Zeitpunkt ist, zu dem so viele Elektrofahrzeuge die Ladeinfrastruktur erreicht haben, dass eine Summe ihrer Speicherkapazitäten eine vorgegebene Mindestspeicherkapazität aufweist. Hier wird besonders berücksichtigt, dass zu erwarten ist, dass die Ladezustände einen geringen Wert aufweisen, wenn die Elektrofahrzeuge angekommen sind, also wenn sie nach getaner Arbeit zurück zum Ladeterminal kommen.

Gemäß einer Ausführungsform ist vorgesehen, dass dem prognostizierten Startladepunkt des Ladezustandsbereichs eine Erwartungswahrscheinlichkeit zugeordnet wird. Eine solche Erwartungswahrscheinlichkeit kann auch synonym als Verfügbarkeit oder Verfügbarkeitswahrscheinlichkeit bezeichnet werden. Das kann ein einzelner Wert sein, oder zwei Werte, nämlich je einen für den Anfangsladezustand und einen für den Startzeitpunkt, es kann aber auch eine Wahrscheinlichkeitsverteilung sein, bzw. zwei Wahrscheinlichkeitsverteilungen.

Besonders wurde erkannt, dass Ankunftszeiten und Ladezustände vieler Fahrzeuge eines Fuhrparks statistisch betrachtet werden können. Meist gibt es eine früheste Zeit, die etwa 15 Minuten vor einer planmäßigen Ankunftszeit liegen kann, vor der üblicherweise kein Fahrzeug ankommt, also zurück zu seiner Ladestation kommt, denn bis dahin haben die Fahrzeuge Aufgaben zu erfüllen, die oftmals auch in einem Fahrplan festgelegt sind. Die Wahrscheinlichkeit, dass überhaupt ein Fahrzeug bis dahin zurückgekommen ist, liegt vielleicht bei 1%.

Zur planmäßigen Ankunftszeit ist grundsätzlich mit allen Fahrzeugen zu rechnen, wenn alle Fahrzeuge dieselbe planmäßige Ankunftszeit haben. Die Wahrscheinlichkeit für jedes einzelne Fahrzeug, bis zur planmäßigen Ankunftszeit anzukommen, also zurückzukommen, liegt vielleicht bei 50%. Die Wahrscheinlichkeit, dass überhaupt ein Fahrzeug bis dahin zurückkommt, liegt vielleicht bei 95%, je nach Anzahl Fahrzeuge, wohingegen die Wahrscheinlichkeit, dass alle Fahrzeuge bis dahin zurückgekommen sind, sehr niedrig ist, denn irgendein Fahrzeug wird sich immer verspäten. Irgendwann werden aber alle Fahrzeuge zurückgekommen sein, sodass z.B. 45 Minuten nach der planmäßigen Ankunftszeit die Wahrscheinlichkeit sehr hoch ist, dass alle Fahrzeuge zurückgekommen sind.

Ähnlich verhält es sich auch mit dem Summenladezustand, wobei dieser kein diskreter Wert ist. Es gibt eine Grundannahme, mit welcher Restladung jedes Fahrzeug zur Ladestation zurückkehrt, z.B. 30%, denn sie sind entsprechend ausgelegt, die Aufgaben zu erfüllen, aber auch eine Ladereserve zu haben. Dass der Summenladezustand bei der Rücckehr wenigstens 90% beträgt, immer bezogen auf einen maximalen Summenladezustand, der somit 100% bildet, ist sehr unwahrscheinlich, denn die Fahrzeuge sind ja gefahren. Dass er wenigstens 30% beträgt, hat vielleicht eine Wahrscheinlichkeit von 50%. Dass er aber wenigstens 5% beträgt, ist sehr wahrscheinlich, denn dass alle Fahrzeuge auf den Punkt mit leerem Speicher in ihre Ladestation rollen, ist kaum zu erwarten.

Hier wurde nun besonders erkannt, dass es für die Planung wichtig ist, den Summenladezustand etwa zu kennen, sowohl hinsichtlich eines oberen, als auch hinsichtlich eines unteren Wertes, denn davon kann die Leistungs- bzw. Energiebeschaffung für das Laden abhängen, aber auch die Menge an Leistung bzw. Energie, die für Systemdienstleistungen für das Netz, wie Maßnahmen der Netzstützung, bereitgestellt werden kann. Dabei wurde erkannt, dass ein solcher Wert nicht exakt prognostiziert werden kann, dass die Planung aber gut durchgeführt werden kann, wenn die Wahrscheinlichkeiten für den ermittelten Wert, oder für mehrere Werte bekannt sind. Dabei wurde auch erkannt, dass Wahrscheinlichkeiten für einen Fuhrpark gut bestimmt werden können.

Eine Möglichkeit besteht darin, einem prognostizierten Anfangsladezustand, der durch einen Bereich angegeben wird, der bspw. 5% breit ist, einen Wahrscheinlichkeitswert zuzuordnen. Z.B. könnte ein prognostizierter Anfangsladezustand 20%-30% des maximalen Summenladezustands betragen und dafür eine Wahrscheinlichkeit von 50% bestehen. Ein prognostizierter Anfangsladezustand von 20-30%, um bei diesem Beispiel zu bleiben, könnte angenommen werden, wenn die Prognose einen Wert in diesem Bereich ermittelt hat, z.B. 25%.

Alternativ kann auch als Erwartungswahrscheinlichkeit ein Wahrscheinlichkeitsdichtewert angegeben werden, um dadurch dem Umstand Rechnung zu tragen, dass der Anfangsladezustand nicht als diskreter Wert vorliegt. In dem Beispiel könnte dann für den Wert des Summenladzustandes von 25% ein Wahrscheinlichkeitsdichtewert von 50%/(30%-20%)=5 verwendet werden.

Es kommt aber auch in Betracht, als Erwartungswahrscheinlichkeit eine Wahrscheinlichkeitsverteilung anzugeben, also über den gesamten Bereich des Ladezustands von 0% bis 100%. Auch das kann als Wahrscheinlichkeitsverteilung oder als Wahrscheinlichkeitsdichteverteilung angegeben werden.

Ebenfalls wurde erkannt, dass es für die Planung auch wichtig sein kann, den Startzeitpunkt zu prognostizieren, denn sowohl Kosten für Leistungs- bzw. Energiebeschaffung als auch der Bedarf an Leistung bzw. Energie zur Netzstützung hängen von dem Zeitraum ab, in dem beschafft bzw. gestützt wird.

Entsprechend können Prognosen für einen Startzeitpunkt erstellt werden und mit Wahrscheinlichkeitswerten als Erwartungswahrscheinlichkeit ergänzt werden. Ein Startzeitpunkt des Ladezustandsbereichs kann als der Zeitpunkt definiert werden, zu dem eine Mindestanzahl der Fahrzeuge zurück in der Ladeinfrastruktur ist. Die kann auch als relativer Wert angesetzt werden, z.B. 90% aller Fahrzeuge. Das kann sich alternativ auch auf deren Speichergröße beziehen, z.B. 90% der Gesamtspeicherkapazität. Auch hier kommen Wahrscheinlichkeitswerte, Wahrscheinlichkeitsdichtewerte, eine Verteilung der Wahrscheinlichkeitswerte und eine Verteilung der Wahrscheinlichkeitsdichtewerte in Betracht.

Es kommt auch in Betracht, dass die Erwartungswahrscheinlichkeit dem Startladepunkt insgesamt zugeordnet wird. So kann die Erwartungswahrscheinlichkeit sinngemäß auf die gleiche Art und Weise einem prognostizierten Anfangsladezustand des Summenladezustands zu einem prognostizierten Startzeitpunkt zugeordnet werden. Auch hier kommen Wahrscheinlichkeitswerte, Wahrscheinlichkeitsdichtewerte, eine Verteilung der Wahrscheinlichkeitswerte und eine Verteilung der Wahrscheinlichkeitsdichtewerte in Betracht.

Vorzugsweise werden mehrere Startladepunkte mit zugehörigen Erwartungswahrscheinlichkeiten prognostiziert. Dafür kann z.B. zwei oder mehr Startladezeitpunkten jeweils ein Anfangsladezustand zugeordnet werden, und dazu jeweils eine Erwartungswahrscheinlichkeit zugeordnet werden. Auch hier kommen dann jeweils Wahrscheinlichkeitswerte, Wahrscheinlichkeitsdichtewerte, eine Verteilung der Wahrscheinlichkeitswerte und eine Verteilung der Wahrscheinlichkeitsdichtewerte in Betracht. Die Prognose kann dann besonders diese Erwartungswahrscheinlichkeiten prognostizieren, was insoweit eine Prognose des Startladepunktes ist.

Gemäß einer Ausführungsform wird vorgeschlagen, Abweichungen zwischen einem prognostizierten Anfangsladezustand und einem erfassten Summenladezustand auszuregeln.

Beim Ausregeln solcher Abweichungen wird Leistung aus dem elektrischen Versorgungsnetz in die Speicher der Elektrofahrzeuge eingespeichert, oder aus den elektrischen Speichern in das elektrische Versorgungsnetz eingespeist, je nachdem, ob der prognostizierte Anfangsladezustand unter oder über dem erfassten Summenladezustand liegt. Das Ausregeln kann sich über einen Teilzeitraum des Bereitstellungszeitraumes erstrecken.

Hier liegt besonders der Gedanke zu Grunde, dass besonders zu Beginn des Bereitstellungszeitraumes ein solches Ausregeln wenig Kosten verursacht, oder dass es zumindest Zeitbereiche in dem Bereitstellungszeitraum gibt, in dem dadurch wenig Kosten entstehen. Durch eine gute Prognose, die bei einem Fuhrpark mit Fahrplan erreichbar ist, sollte die Abweichung entsprechend gering ausfallen, so dass wenig Kosten entstehen. Durch das Ausregeln kann dann der prognostizierte Summenladezustand erreicht werden. Die später auf der Prognose basierende Leistungs- oder Energiebeschaffung kann somit trotz ursprünglicher Abweichungen wie geplant durchgeführt werden.

Das führt auch dazu, dass die Prognose mit einer sehr hohen Wahrscheinlichkeit angegeben werden kann, ggf. sogar mit der Wahrscheinlichkeit 1. Denn sollte die Prognose abweichen, kann sie ausgeregelt werden. Durch die Angabe einer hohen Wahrscheinlichkeit kann die benötigte Leistung bzw. Energie mit geringeren Kosten beschafft werden und die zur Netzstützung angebotene Leistung bzw. Energie zu höheren Kosten angeboten werden. Dieser Vorteil ergibt sich jede Nacht, wobei aber nur selten, und in geringerem Maße, das Ausregeln durchgeführt werden muss.

Insbesondere wird vorgeschlagen, eine solche Abweichung in Abhängigkeit eines Leistungsangebots oder Leistungsbedarfs des elektrischen Versorgungsnetzes auszuregeln, also besonders Teilzeiträume in dem Bereitstellungszeitraum auszuwählen, in denen das Leistungsangebot oder der Leistungsbedarf des elektrischen Versorgungsnetzes für das

Ausregeln günstig ist. So können besonders kostengünstige Zeitbereiche gewählt werden, in denen das Ausregeln dem Netzbedarf zu Gute kommt, was weitere Kosten spart, oder sogar Gewinn einbringt.

Gemäß einer Ausführungsform wird vorgeschlagen, dass ein Wert des Startladepunktes des Ladezustandsbereichs für eine vorbestimmte Verfügbarkeit als Verfügbarkeitswert prognostiziert wird, insbesondere, dass ein Wert des Anfangsladezustands, also des Summenladezustands, oder des Startzeitpunktes als Verfügbarkeitswert prognostiziert wird, insbesondere dass als Verfügbarkeitswert ein p50-Wert, ein p90-Wert, ein p95-Wert, ein p98-Wert oder ein p99,98-Wert verwendet wird.

Eine Verfügbarkeit des Startladepunktes gibt eine Wahrscheinlichkeit an, mit der dieser Startladepunkt wenigstens eine vorgegebene Mindesteigenschaft erfüllt. Hier liegt nun der Gedanke zu Grunde, eine Verfügbarkeit, also eine gewünschte Wahrscheinlichkeit vorzugeben, und dafür die wenigstens eine Mindesteigenschaft des Startladepunktes zu prognostizieren, z.B. an Hand eines Fahrplans und/oder an Hand von Erfahrungswerten zu prognostizieren.

Diese Mindesteigenschaft bildet dann den Verfügbarkeitswert. Der Verfügbarkeitswert kann besonders als p50-Wert, p90-Wert, p95-Wert, p98-Wert oder p99,98-Wert vorgesehen sein, also als Verfügbarkeitswert für die zu Grunde liegende Wahrscheinlichkeit von 50%, 90%, 95%, 98% bzw. 99,98%.

Der Verfügbarkeitswert, z.B. p90-Wert, des Startladezustands ist der Mindestladezustand, der mit einer Wahrscheinlichkeit von 90% erreicht wird, insbesondere zu einem vorgegebenen Startzeitpunkt. Es wird also die gewünschte Verfügbarkeit bzw. Wahrscheinlichkeit vorgegeben, in diesem Beispiel 90%, und ein Startzeitpunkt, z.B. 18:00, zu dem diese Verfügbarkeit vorliegen soll. Der Anfangsladezustand, der um 18:00 mit einer Wahrscheinlichkeit von 90% wenigstens erreicht wird, ist der Verfügbarkeitswert. Im Beispiel ist das also der p90-Wert. Der Verfügbarkeitswert kann dann z.B. 25% bezogen auf eine vollständige Ladung, also den maximalen Summenladezustand betragen. Es kann aber auch ein absoluter Wert genommen werden, z.B. 40kAh, bei gegebener Spannung.

Der so prognostizierte Anfangsladezustand kann dann um 18:00 mit einer Verfügbarkeit von 90% angeboten werden, bzw. eine zugehörige Speicherkapazität kann um 18:00 mit der Verfügbarkeit angeboten werden. Wenn Schwankungen des Ladezustands über die Zeit nicht vorkommen oder vernachlässigbar sind, kann auf die Randbedingung der Vorgabe des Startzeitpunktes verzichtet werden.

Statt dem positiven Ladezustand, also wie voll die Speicher sind, kann auch ein negativer Ladezustand betrachtet werden, also wie leer die Speicher sind, bzw. wie viel freie Speicherkapazität vorhanden ist. Dieser Wert ist dafür relevant, wie viel Leistung zum Stützen aus dem elektrischen Versorgungsnetz aufgenommen werden kann. Dieser Wert kann auch besonders für die Energiebeschaffung für das Laden der elektrischen Speicher von Relevanz sein.

Der Verfügbarkeitswert, z.B. p90-Wert, um bei obigem Beispiel zu bleiben, des Startladezustands kann alternativ den Startzeitpunkt bezeichnen, zu dem ein vorgegebener Mindestladezustand des Summenladezustandes, mit einer Wahrscheinlichkeit von 90% erreicht wird. Bei dieser Variante wird wieder die gewünschte Verfügbarkeit, bzw. Wahrscheinlichkeit vorgegeben. Dazu wird vorgegeben, welchen Wert der Summenladezustand bzw. Startladezustand aufweisen soll. Dafür kann bspw. ein Wert von 30% bezogen auf eine vollständige Ladung, also den maximalen Summenladezustand, vorgegeben werden, oder 50% als Wert für die freie Speicherkapazität.

Es wird dann der Startzeitpunkt als Verfügbarkeitswert prognostiziert, zu dem mit einer Wahrscheinlichkeit von 90% wenigstens 30% der maximal möglichen Ladung vorhanden ist, oder wenigstens 50% der freien Speicherkapazität vorhanden ist. Das kann z.B. um 18:30 sein. 18:30 ist dann der Verfügbarkeitswert.

Auch hier liegt der Gedanke zu Grunde, dass die Elektrofahrzeuge mit einer Restladung zur Ladeinfrastruktur zurückkehren, besonders abends. Die Elektrofahrzeuge kommen somit nach und nach an und dadurch erhöht sich der Anfangsladezustand, sowohl der positive, als auch der negative, denn von den Fahrzeugen, die noch nicht zurück sind, kann weder gespeicherte Energie noch die freie Speicherkapazität genutzt werden.

Ein p90-Wert ist besonders dann sinnvoll, wenn eine Regelleistung angeboten werden soll. Hier liegt die Erkenntnis zu Grunde, dass eine Regelleistung dann angeboten werden kann, wenn sie mit einer Wahrscheinlichkeit von 90% zur Verfügung steht. Somit wird ein p90-Wert besonders als Verfügbarkeitswert des Anfangsladezustandes vorgeschlagen.

Vorzugsweise kann für besonders systemrelevante Netzstützungen eine sehr hohe Verfügbarkeit sinnvoll sein und besonders dafür wird ein p95-Wert vorgeschlagen und bei noch höheren Anforderungen, besonders, wenn sie stabilitätsrelevant sind, wird ein p98-Wert vorgeschlagen. Somit wird ein p95-Wert, als auch ein p98-Wert besonders als Verfügbarkeitswert des Anfangsladezustandes vorgeschlagen.

Es wurde erkannt, dass Anforderungen seitens des Netzbetreibers erwartet werden können, dass Stützleistungen so verlässlich angegeben werden müssen, dass sie mit einer 99,98%itgen Wahrscheinlichkeit verfügbar sein müssen. Es wurde erkannt, dass mit der vorliegenden Infrastruktur eine solche Verfügbarkeit angeboten werden kann, dass nämlich ein p99,98-Wert realisiert werden kann. Entsprechend wird ein p99,98-Wert als eine Variante vorgeschlagen. Somit wird ein p99,98-Wert besonders als Verfügbarkeitswert des Anfangsladezustandes vorgeschlagen.

Ein p50 Wert wird besonders dann vorgeschlagen, wenn es um eine Beschaffung von Energiemengen geht. Hier liegt die Erkenntnis zu Grunde, dass der p50-Wert einem mittleren Erwartungswert entspricht und daher hier sinnvoll ist. Insbesondere wird vorgeschlagen, in diesem Fall eine Energiemenge in Höhe des p50-Wertes zu beschaffen.

Somit wird insbesondere vorgeschlagen, dass dem prognostizierten Anfangsladezustand und/oder dem prognostizierten Startzeitpunkt jeweils eine Erwartungswahrscheinlichkeit zugeordnet wird. Dadurch kann mit dem Startladepunkt besser geplant werden.

Die Erwartungswahrscheinlichkeit kann sich aus einzelnen Wahrscheinlichkeiten und/oder Erwartungswerten der einzelnen Elektrofahrzeuge ergeben, nämlich sowohl ihrer Ankunftszeiten, fürdie es Wahrscheinlichkeiten gibt, als auch fürdie einzelnen Ladezustände, für die es ebenfalls Wahrscheinlichkeiten gibt. Die Wahrscheinlichkeiten können insbesondere adaptiv genauer bestimmt werden bzw. über wiederholte Erfassungen einzelner Werte aufgenommen und zu einer Verteilung zusammengesetzt werden.

Hier liegt besonders auch die Erkenntnis zu Grunde, dass Elektrofahrzeuge eines Fuhrparks täglich wiederkehrende Aufgaben erledigen, insbesondere täglich wiederkehrende Fahrpläne haben, so dass täglich neu vergleichbare Werte aufgenommen werden können. Dadurch ist es möglich, statistisch auswertbare Werte zu sammeln.

Gemäß einer Ausführungsform wird vorgeschlagen, ausgehend von dem Anfangswert des Summenladezustandes, also dem Anfangsladezustand zum Startzeitpunkt, und ausgehend von einem Mindestwert, der für den Summenladezustand für einen Zielzeitpunkt vorgegeben wird, den Ladezustandsbereich aufzuspannen.

Dadurch können für den Ladezustandsbereich ein Anfangswert und auch ein Endwert geschaffen werden. Anschaulich gesprochen weitet sich der Ladezustandsbereich ausgehend von dem Anfangswert über die Zeit auf und läuft dann zum Mindestwert am Zielzeitpunkt wieder zu. Besonders kann der Anfangsladezustand, wenn der Ladezustandsbereich als Vorhersage ermittelt werden soll, als Prognose erstellt werden. Diese Prognose hängt besonders davon ab, wie der Fahrplan der Elektrofahrzeuge aussieht und inwieweit davon Abweichungen zu erwarten sind, wie oben beschrieben wurde. Der Anfangsladezustand zu einem Startzeitpunkt ergibt sich besonders daraus, wie viel die Elektrofahrzeuge des Fuhrparks in der Zeit vor dem Startzeitpunkt gefahren sind. Besonders wird angenommen, dass solche Elektrofahrzeuge tagsüber gefahren sind und dadurch ihr elektrischer Speicher entsprechend teilentladen wurde.

Der Zielzeitpunkt für den Ladezustandsbereich kann dann den Anfangszeitpunkt für die Elektrofahrzeuge vor ihrem Losfahren, also insbesondere am nächsten Morgen, sein. Hierzu kann ein Mindestwert vorgesehen sein, weil die Elektrofahrzeuge nämlich eine gewisse Mindestladung benötigen, um die dann auszuführenden Fahrten absolvieren zu können. Wenn bekannt ist, dass sie nicht unbedingt vollgeladen sein müssen, kann je nach Wunsch nach Austauschleistung jeweils nur der Summenladezustand bis zum Mindestwert erreicht werden. Es kommt aber auch in Betracht, dass die Speicher stärker aufgeladen werden. Dann weisen sie mehr elektrische Energie in dem Speicher auf als nötig, aber jedenfalls nicht zu wenig, sodass sie die geplanten Fahrleistungen erledigen können.

Insbesondere ist vorgesehen, dass die Austauschleistung so gesteuert wird, dass der Summenladezustand den Ladezustandsbereich nicht verlässt, während der Summenladezustand über den Bereitstellungszeitraum oder einen Teil davon beginnend vom Startzeitpunkt, den Anfangswert aufweisend, zum Zielpunkt den Mindestwert erreicht oder überschreitet. Der Summenladezustand wird somit vom Startzeitpunkt zum Zielzeitpunkt durch den Ladezustandsbereich hindurchgesteuert. Der genaue Verlauf des Summenladezustands ist hierbei variabel, solange er innerhalb des Ladezustandsbereichs bleibt.

Hier wurde besonders erkannt, dass dieser Verlauf des Summenladezustands innerhalb des aufgespannten Ladezustandsbereichs variiert werden kann und dass dadurch eine Regelungsfreiheit entsteht, je nach Bedarf, besonders Bedarf des elektrischen Versorgungsnetzes an positiver oder negativer Austauschleistung.

Besonders ist vorgesehen, dass solche gewünschte Austauschleistung darauf abgestimmt ist, dass der Summenladezustand den Ladezustandsbereich nicht verlässt. Entsprechend wird eine Steuerung der Elektrospeicher in der Ladeinfrastruktur vorgenommen. Das kann besonders durch eine Ladesteuereinheit vorgenommen werden. Diese Ladesteuereinheit, oder andere Steuereinrichtung, kann somit als gemeinsamen Wert die Austauschleistung steuern, indem sie dafür die einzelnen Elektrospeicher entsprechend ansteuert. Das kann z. B. durch entsprechende Sollwerte erfolgen. Gleichzeitig kann sie aber, wieder als kumulierte Größe, den Summenladezustand im Ladezustandsbereich halten. Entsprechend kann eine solche Ladesteuereinheit oder andere zentrale Steuerung Anforderungen von Austauschleistungen ablehnen, die zu einem Verlassen des Ladezustandsbereichs durch den Summenladezustand führen würden.

Außerdem oder alternativ kann oder sollte die Austauschleistung von vornherein nur so angefordert werden, dass der Summenladezustand den Ladezustandsbereich nicht verlässt.

Gemäß einer Ausführungsform wird vorgeschlagen, dass zum Einstellen der Austauschleistung der Ladezustandsbereich, oder ein Teil davon, als Variationsbereich angeboten wird und abhängig von dem Variationsbereich eine Austauschvorschrift bestimmt wird, die einen Rahmen für das Einstellen der Austauschleistung so vorgibt, dass der Ladezustand den Variationsbereich nicht verlässt.

Hier wird besonders vorgeschlagen, dass in Abhängigkeit von dem Ladezustandsbereich vorgegeben wird, inwieweit eine Austauschleistung eingestellt werden kann. Hierbei ist zu beachten, dass der Ladezustandsbereich im Grunde einen Bereich für Energie vorgibt, wohingegen die Austauschleistung als physikalische Einheit Leistung und damit Energie pro Zeit hat. In dem Ladezustandsbereich kann somit für einen kurzen Zeitraum sicherlich in dem gesamten Bereich des Bereitstellungszeitraums eine gewisse Leistung als positive oder negative Austauschleistung möglich sein. Dauerhaft wird sich das Abgeben oder Aufnehmen einer Austauschleistung aber auf den Summenladezustand auswirken, der sich dadurch auf die Ober- oder Untergrenze zubewegt. Der Summenladezustand könnte dann nach einer Zeit den Ladezustandsbereich verlassen.

Es gibt somit viele Möglichkeiten, eine Austauschleistung vorzusehen, ohne dass der Ladezustandsbereich verlassen wird. Es ist daher nicht möglich, den Ladezustandsbereich eindeutig auf einen Austauschleistungsbereich zu transformieren. Daher muss die Austauschleistung so bestimmt werden, dass der Ladezustand den Ladezustandsbereich bzw. den Variationsbereich nicht verlässt.

Im einfachsten Fall ist der Variationsbereich identisch mit dem Ladezustandsbereich. Es kann auch vorgesehen sein, beispielsweise den Anfangsbereich oder Endbereich des Ladezustandsbereichs auszulassen und den Variationsbereich nur als Teil des Ladezustandsbereichs vorzusehen. Auf jeden Fall sollte der Variationsbereich an keiner Stelle außerhalb des Ladezustandsbereichs liegen.

Die Austauschvorschrift gibt somit diesen Zusammenhang vor. In einem Fall kann die Austauschvorschrift auch so gestaltet sein, dass sie als Regelungsvorschrift ausgebildet ist, bei der für einen Zeitabschnitt innerhalb des Bereitstellungszeitraums, insbesondere am Anfang, eine gewünschte Austauschleistung vorgegeben wird, die dann in ein Modell eingegeben wird, das das Verhalten der elektrischen Speicher der Fahrzeuge des Fuhrparks innerhalb der Ladeinfrastruktur nachbildet. Das Modell kann das Verhalten der implementierten Steuervorrichtung, die einen solchen Wert der Austauschleistung auf die einzelnen elektrischen Speicher verteilt, enthalten. Es resultiert dann, auch in dem Modell, eine Reaktion der elektrischen Speicher auf die Abgabe bzw. Aufnahme der Austauschleistung, und daraus ergibt sich also für jeden Speicher ein neuer Ladezustand und damit auch ein neuer Summenladezustand. Für diesen wird dann überprüft, ob er noch in dem Ladezustandsbereich liegt. Entsprechend kann die gewünschte Austauschleistung ihren Wert beibehalten oder muss verringert oder verändert werden.

Auf sinngemäß ähnliche Art und Weise kann auch eine Vorberechnung mittels einer entsprechenden Wiederholungsschleife vorgesehen sein, bei der die Austauschleistung wie gewünscht eingegeben wird, mittels eines Modells die Reaktion der einzelnen Speicher ermittelt wird, und damit letztlich der Summenladezustand ermittelt wird. Der so ermittelte Summenladezustand kann dann auf das Kriterium überprüft werden, ob er im Ladezustandsbereich geblieben ist, und entsprechend kann ein neuer Wert für die Austauschleistung überprüft werden. So kann eine mögliche Austauschleistung bzw. ein Verlauf der Austauschleistung über den gesamten Bereitstellungszeitraum bzw. den gesamten Zeitraum, für den der Variationsbereich vorgegeben ist, geprüft und damit schließlich vorgegeben werden. Auf diese Art und Weise kann auch eine Vorhersage für einen Verlauf der Austauschleistung bestimmt werden.

Ergänzend wird optional vorgeschlagen, dass die Austauschvorschrift für die Austauschleistung wenigstens eine weitere Bedingung für das Erstellen der Austauschleistung aufweist. Folgende Bedingungen kommen in Betracht:
- Maximalwerte für die Austauschleistung,
- Minimalwerte für die Austauschleistung,
- maximale Änderungen der Austauschleistung und
- minimale Änderungen der Austauschleistung.

Diese Werte sind jeweils als absolute Werte zu versehen. Somit sind die Minimalwerte für die Austauschleistung sowie die minimalen Änderungen der Austauschleistung grundsätzlich negative Werte. Damit wird eine negative Austauschleistung dem Betrage nach begrenzt und eine negative Änderung der Austauschleistung ebenfalls dem Betrage nach begrenzt.

Hier wurde besonders erkannt, dass Werte für die Austauschleistung oder für einen Verlauf der Austauschleistung vorgegeben werden können, die den Summenladezustand nicht aus dem Ladezustandsbereich herausführen, aber aus anderen Gründen nicht in Betracht kommen. Besonders können auch sehr hohe Werte für eine Austauschleistung den Summenladezustand nicht aus dem Ladezustandsbereich herausführen, wenn ein solcher hoher Leistungswert nur kurz genug vorgegeben wird. Er kann aber an andere Grenzen stoßen, die oben teilweise schon beschrieben wurden. Solche Grenzen können auch in der maximalen Abgabefähigkeit von Leistung der elektrischen Speicher liegen. Auch die Ladepunkte können eine solche Grenze vorgeben sowie auch der oder die Netzanschlusspunkte. Auch die Kapazitäten des elektrischen Versorgungsnetzes können eine Grenze darstellen, besonders in lokalen Netzabschnitten.

Gleiches kann für eine zu starke Änderung der Austauschleistung gelten, besonders zu große Sprünge können ungünstig sein, weil sie z.B. unerwünschte Reaktionen im elektrischen Versorgungsnetz auslösen können.

Somit ist vorgesehen, solche Bedingungen in der Austauschvorschrift zu berücksichtigen. Dem liegt auch der Gedanke zu Grunde, dass solche Bedingungen das Ergebnis vieler komplexer Einzelbedingungen sein können, z. B. des einzelnen Verhaltens jedes einzelnen Ladepunktes und/oder des einzelnen Verhaltens jedes einzelnen Elektrospeichers. All das kann aber insbesondere kumulativ in der Austauschvorschrift zusammengefasst sein. Es kann dann bei der Bestimmung oder Prüfung der Austauschleistung auf einfache Art und Weise vorgegangen werden, indem auf diese Austauschvorschrift zurückgegriffen wird. Solche Bedingungen können natürlich auch Toleranzen berücksichtigen, sodass beispielsweise ein Maximalwert für die Austauschleistung um einen gewissen prozentualen Wert unterhalb eines tatsächlich physikalischen Grenzwertes der Austauschleistung liegt. Dadurch können sichere Werte für die Austauschleistung bestimmt werden, die somit für eine hohe Sicherheit sorgen und gleichzeitig auch tolerant sind, wenn sich Randbedingungen ändern können, wie beispielsweise eine Umgebungstemperatur.

Vorzugsweise wird die Austauschleistung abhängig von dem Ladezustandsbereich bestimmt und/oder sie wird abhängig von dem Summenladezustand bestimmt und/oder sie wird abhängig von einem prognostizierten Summenladezustand bestimmt. Insoweit die Austauschleistung in Abhängigkeit von dem Variationsbereich bestimmt wurde, wurde sie somit auch schon abhängig von dem Ladezustandsbereich bestimmt. Diese Bestimmung kann somit indirekt, also über den Variationsbereich erfolgen, oder direkt, indem unmittelbar der Ladezustandsbereich berücksichtigt wird.

Außerdem wird vorgeschlagen, dass die Austauschleistung abhängig von dem Summenladezustand bestimmt wird, nämlich entweder dem aktuellen und/oder einem prognostizierten. Hier kommt besonders in Betracht, dass berücksichtigt wird, wie nah der Summenladezustand an einer zeitabhängigen Obergrenze oder zeitabhängigen Untergrenze ist, die den Ladezustandsbereich kennzeichnen. Ist der Summenladezustand weit entfernt von solchen Grenzen, kann die Austauschleistung vorzugsweise in zeitlich größeren Schritten bestimmt werden, oder so bestimmt werden, dass größere Energiemengen involviert sind. Ist der Summenladezustand aber an einer der beiden Grenzen, wird vorgeschlagen, die Austauschleistung in kleineren zeitlichen Schritten zu bestimmen.

Gemäß einer Ausführungsform wird vorgeschlagen, dass in Abhängigkeit von dem Ladezustandsbereich wenigstens eine Angebotsleistung als Bereich für die Austauschleistung für einen Angebotszeitbereich, der innerhalb des Bereitstellungszeitraums liegt, angeboten wird, indem die Austauschleistung variiert werden kann. Es wird also eine Angebotsleistung als Bereich erstellt. Das kann beispielsweise durch die Ladesteuereinheit erfolgen. Eine solche Angebotsleistung kann an einen Netzbetreiber oder eine andere Steuereinheit im elektrischen Versorgungsnetz übertragen werden. Diese kann dann in diesem Rahmen, der durch diese Angebotsleistung gegeben ist, die Austauschleistung variieren.

Die Angebotsleistung wird dabei auch als zeitlicher Bereich vorgegeben, nämlich für einen Angebotszeitbereich. Beispielsweise kann der Bereitstellungszeitraum acht Stunden betragen, nämlich z. B. in der Nacht, und darin beispielsweise für eine halbe Stunde eine Angebotsleistung vorgegeben sein. Innerhalb dieser halben Stunde kann also die Austauschleistung bis zum Wert der Angebotsleistung in Anspruch genommen werden.

Dadurch ist es möglich, konkrete Leistungswerte und Bereiche zu schaffen, mit denen ein Netzbetreiber oder andere Steuereinheit im elektrischen Versorgungsnetz arbeiten kann, ohne die Interna der Ladeinfrastruktur kennen zu müssen. Es wird also ein einfacher Wert als Bereich herausgegeben, in dem gearbeitet werden kann.

Gemäß einer Ausführungsform wird vorgeschlagen, dass die Angebotsleistung wenigstens als ein Leistungskontingent für wenigstens einen Angebotszeitabschnitt innerhalb des Bereitstellungszeitraums angeboten wird. Auch hier liegt die Überlegung zugrunde, dass der Ladezustandsbereich dem Grunde nach einen Raum für Energie definiert, wohingegen für Planungen des elektrischen Versorgungsnetzes Leistungswerte meist relevant sind. Entsprechend wird vorgeschlagen, solche Leistungskontingente anzubieten, zumindest ein Leistungskontingent. Dadurch, dass ein Leistungskontingent jeweils für einen Angebotszeitabschnitt angeboten wird, kann diesem zeitlich befristeten Leistungskontingent auch eine Energiemenge zugeordnet werden. Das zeitabhängige Leistungskontingent lässt sich somit in dem Ladezustandsbereich abbilden, nämlich durch eine Veränderung des Summenladezustands, der aus einem Abrufen des Leistungskontingents resultieren würde. Gleichzeitig kann das elektrische Versorgungsnetz, nämlich insbesondere ein Netzbetreiber desselben oder eine Netzsteuereinheit mit den entsprechenden angebotenen Leistungswerten arbeiten.

Gemäß einer Ausgestaltung wird vorgeschlagen, dass ein Netzbetreiber des elektrischen Versorgungsnetzes oder eine Netzsteuereinheit zum Steuern des elektrischen Versorgungsnetzes die Austauschleistung in Abhängigkeit von dem Variationsbereich und/oder von der Angebotsleistung vorgibt. Hier liegt der Gedanke zugrunde, dass der Netzbetreiber bzw. die Netzsteuereinheit Informationen über die verfügbare Speicherkapazität erhält. Solche Informationen können wie vorstehend gemäß verschiedenen Ausführungsformen erläutert wurde, übergeben werden.

Es kommt auch in Betracht, dass unmittelbar der Ladezustandsbereich und gegebenenfalls auch Informationen über aktuelle oder zu erwartende Summenladezustände übergeben werden. Darauf basierend kann dann der Netzbetreiber oder die Netzsteuereinheit Austauschleistung vorgeben, insbesondere Verläufe der Austauschleistung über die Zeit vorgeben. Diese vorgegebenen Austauschleistungswerte werden dabei so vorgegeben, dass der Summenladezustand den Ladezustandsbereich nicht verlässt. Basierend auf den dann so vorgegebenen Austauschleistungen, oder der einzelnen Austauschleistung, können die einzelnen elektrischen Speicher der Elektrofahrzeuge des Fuhrparks Speicherleistung aufnehmen oder abgeben.

Besonders bevorzugt kann eine Ladesteuereinheit der Ladeinfrastruktur die vorgegebene Austauschleistung auf die einzelnen Elektrospeicher, insbesondere auf die einzelnen Ladepunkte, an denen die Elektrofahrzeuge angeschlossen sind, aufteilen. Das kann beispielsweise als Steuerbefehl erfolgen oder als einzelne Vorgaben für einen Lade- oder Entladeverlauf. Natürlich können hier auch elektrische Speicher mit einbezogen werden, die nicht in einem Elektrofahrzeug des Fuhrparks angeordnet sind, sondern die zusätzlich vorgesehen und ansteuerbar sind.

Vorzugsweise wird somit vorgeschlagen, dass in Abhängigkeit von dem Ladezustandsbereich, abschnittsweise oder vollständig für den Bereitstellungszeitraum, ein zeitlicher Verlauf des Summenladezustands vorgegeben wird und/oder ein zeitlicher Verlauf der Austauschleistung vorgegeben wird. Durch die Vorgabe solcher zeitlichen Verläufe kann eine entsprechend gezielte Steuerung vorgenommen werden.

Gemäß einer Ausführungsform wird vorgeschlagen, dass der Ladezustandsbereich an den Netzbetreiber des elektrischen Versorgungsnetzes oder an die Netzsteuereinheit zum Steuern des elektrischen Versorgungsnetzes oder eines Abschnitts davon übertragen wird. Gemäß dieser Ausführungsform erhält der Netzbetreiber bzw. die Netzsteuereinheit unmittelbar die Information über den Ladezustandsbereich.

Besonders wird vorgeschlagen, dass der Netzbetreiber bzw. die Netzsteuereinheit in Abhängigkeit von dem Ladezustandsbereich den Summenladezustand vorgibt, insbesondere den zeitlichen Verlauf des Summenladezustands und außerdem oder alternativ dass der Netzbetreiber bzw. die Netzsteuereinheit in Abhängigkeit von dem Ladezustandsbereich die Austauschleistung vorgibt. Dadurch kann der Netzbetreiber bzw. die Netzsteuereinheit unmittelbar den Ladezustandsbereich für seine Planungen berücksichtigen. Solche Planungen beinhalten ein Leistungsmanagement in dem elektrischen Versorgungsnetz.

Durch die Prognose des Ladezustandsbereichs, besonders durch seinen Anfangsbereich bzw. Startladepunkt, insbesondere den Anfangsladezustand, ist auch eine Energie prognostiziert worden. Vorzugsweise wird vorgeschlagen, dass die Steuereinheit entsprechend der prognostizierten Energie und/oder dem Leistungsrahmen, der nämlich durch den Ladezustandsbereich vorgegeben wird, einen zeitlichen Stromverlauf vorgibt, der auch als Stromfahrplan bezeichnet werden kann. Basierend auf diesem Stromverlauf bzw. Stromfahrplan kann dann eine Austauschleistung zu jedem Zeitpunkt definiert werden und an einen Netzbetreiber übergegeben werden, oder unmittelbar erbracht werden.

Die so vorhergesagte Austauschleistung wird vorzugsweise zur Regelung des elektrischen Versorgungsnetzes verwendet werden. Besonders eine Primärregelleistung kann dadurch angeboten und bereitgestellt werden, aber auch andere Systemdienstleistungen können angeboten und bereitgestellt werden. Dazu kann die vorhergesagte Austauschleistung dem Netzbetreiber des elektrischen Versorgungsnetzes bereitgestellt werden.

Die Steuereinheit, die den Stromverlauf bzw. den Stromfahrplan vorgibt, kann bspw. von einem Stromeinkäufer dazu genutzt werden, seinen Stromeinkauf zu planen. Diese Planung des Stromeinkaufs kann Möglichkeiten zur Regelung des elektrischen Versorgungsnetzes mit berücksichtigen.

Dadurch, dass der Ladezustandsbereich an den Netzbetreiber bzw. die Netzsteuereinheit übergeben wird, erhält der Netzbetreiber bzw. die Netzsteuereinheit diese Information als zur Verfügung stehendes Energiepotential zur Planung der Leistung. Als Ergebnis dieser Planung kann ein Verlauf des Summenladezustands und/oder eine vorgegebene Austauschleistung resultieren, die dann in dem Fuhrpark entsprechend umgesetzt werden kann. Besonders kann dafür der Verlauf des Summenladezustands als Verlauf der einzelnen Ladezustände umgesetzt werden und/oder die Austauschleistung als einzelne Austauschleistung jedes einzelnen elektrischen Speichers umgesetzt werden.

Gemäß einer Ausführungsform wird vorgeschlagen, dass der Summenladezustand zumindest teilweise als Vorhersage bestimmt wird. Hier liegt besonders die Erkenntnis zugrunde, dass der Summenladezustand bzw. sein Verlauf von seinem Startwert abhängt. Dieser Startwert ist im Grunde der Wert, der vorliegt, wenn - anschaulich gesprochen - alle Elektrofahrzeuge des Fuhrparks nach ihrem Tagwerk an die Ladepunkte angeschlossen sind und ihre einzelnen Ladezustände bereitstellen. Aufgrund bekannter und/oder geplanter Aufgaben der Elektrofahrzeuge des Fuhrparks können ihre Ladezustände abgeschätzt werden, sie sind aber im Vorhinein nicht genau bekannt.

Es wird aber in vorteilhafter Weise vorgeschlagen, dass durch diesen Fuhrpark dem Netzbetreiber bzw. der Netzsteuereinheit eine Planung an die Hand gegeben wird. Dazu wird vorgeschlagen, eine Vorhersage zu machen und diese beinhaltet eine Vorhersage über den Summenladezustand. Wo sich der Summenladezustand innerhalb des Ladezustandsbereichs befindet bzw. befinden wird, bestimmt, wie viel Speicherenergie oder Speicherleistung zur Unterstützung des elektrischen Versorgungsnetzes bereitgestellt werden kann.

Eine solche Vorhersage kann beispielsweise dadurch bestimmt werden, dass abhängig von den geplanten Aufgaben der einzelnen Elektrofahrzeuge ein zu erwartender Ladezustand jedes einzelnen Elektrofahrzeugs bzw. seines Speichers berechnet wird und dazu eine Toleranz angegeben wird, z.B. 10%. Dadurch kann auf einfache Weise eine Vorhersage mit Toleranz bestimmt und genutzt werden. Vorzugsweise wird vorgeschlagen, dass der Summenladezustand als Vorhersage bestimmt wird und ergänzend eine Toleranz bestimmt und zugeordnet wird.

Insbesondere wird das Verfahren für jeden Tag wiederholt und durch die Wiederholung kann auch die Vorhersage des Summenladezustands statistisch verbessert werden, indem bei den Wiederholungen, also insbesondere bei jeder Wiederholung, überprüft wird, inwieweit der tatsächliche Summenladezustand oder sein Verlauf den vorhergesagten Summenladezustand erreicht hat.

Insbesondere wird dazu vorgeschlagen, dass der Ladezustandsbereich in Abhängigkeit von dem so bestimmten Summenladezustand zumindest teilweise als Vorhersage bestimmt wird. Insbesondere kann der Anfangsbereich des Ladezustandsbereichs, also der Ladezustandsbereich zu Beginn des Bereitstellungszeitraums, von dem Summenladezustand zu dem Zeitpunkt abhängen. Entsprechend hängt eine Vorhersage des Ladezustandsbereichs von einer Vorhersage des Summenladezustands ab.

Es wird dabei grundsätzlich vorgeschlagen, dass die Bestimmung des Summenladezustands zyklisch, insbesondere tageweise, wiederholt wird, sodass einem aktuell bestimmten Summenladezustand wenigstens ein vorheriger Summenladezustand vorausgeht, und wobei der jeweils aktuell bestimmte Summenladezustand in Abhängigkeit von wenigstens einem der vorherigen Summenladezustände bestimmt wird. Durch diese zyklische Wiederholung kann die Vorhersage für jeden neuen Durchlauf verbessert werden. Insoweit erfolgt eine Adaption der Vorhersage für den Summenladezustand und/oder für den Ladezustandsbereich. Vorteile und wie ein erster Wert bestimmt werden kann, wurde oben ausgeführt.

Gemäß einer Ausführungsform wird vorgeschlagen, dass die Austauschleistung und/oder der Summenladezustand in Abhängigkeit von wenigstens einer Steuerrandbedingung gesteuert wird.

Nutzungskosten, die ein Kostenmaß für die Benutzung der elektrischen Speicher definieren, können eine Steuerrandbedingung sein. Beispielsweise - um ein vereinfachendes anschauliches Beispiel zu wählen - kann von dem elektrischen Speicher des jeweiligen Fahrzeugs bekannt sein, dass dieser 1000 Mal geladen und entladen werden kann, wobei es - ebenfalls vereinfachend angenommen - dabei nur auf die Anzahl der Ladezyklen ankommt, nicht aber auf die jeweils abgegebene und wieder eingespeicherte Energie. Ein Tausendstel der Kosten des elektrischen Speichers entsprechen dann den Kosten eines Lade-/Entladezyklus. Daraus kann dann abgeleitet werden, dass das Laden und Entladen einer Kilowattstunde umso höhere Kosten verursacht, je weniger Energie pro Lade-/Entladezyklus abgegeben und aufgenommen wird. Solche Kosten können dann einem geplanten Lade-/Entladezyklus gegenübergestellt werden.

Die Konsequenz einer solchen Berücksichtigung solcher Nutzungskosten kann - um bei dem vereinfachten Beispiel zu bleiben - auch bedeuten, dass möglichst viel Energie pro Speicher aufgenommen und abgegeben wird. Das kann bedeuten, dass die Austauschleistung für einen Zeitabschnitt umso günstiger in ihren relativen Kosten ist, je größer sie ist.

Es kommt aber auch in Betracht, dass bei Anforderung einer vergleichsweise geringen Austauschleistung ihre relativen Kosten so hoch sind, dass die Austauschleistung nicht angefordert wird und der Netzbetreiber bzw. die Netzsteuereinheit stattdessen diese Austauschleistung aus einer anderen Quelle bzw. Senke beschafft.

Es kommt auch in Betracht, einen Stromverlauf bzw. den Stromfahrplan und die Erbringung von Systemdienstleistungen über die Ladevorgänge hinweg so aufeinander abzustimmen, also insbesondere zu regeln bzw. entsprechend vorzugeben oder zu prognostizieren, dass es zu möglichst wenigen Rückspeisungen aus den elektrischen Speichern in das elektrische Versorgungsnetz kommt. Hierdurch können Kosten reduziert werden, da zusätzliche Lade/-Entlade-Zyklen Kosten verursachen. Insbesondere wird vorgeschlagen, dass die Systemdienstleistungen so angeboten werden, dass eine vorbestimmte Rückspeisegrenze eingehalten wird. Die vorbestimmte Rückspeisegrenze kann über eine Energiemenge vorgegeben werden, die maximal pro Bereitstellungszeitraum zurückgespeist werden darf. Die Rückspeisegrenze kann vorzugsweise maximal 90%, insbesondere maximal 80% der Energiemenge betragen, die maximal in dem Bereitstellungszeitraum zurückgespeist werden kann, oder die als maximal in dem Bereitstellungszeitraum zum Zurückspeisen vorgegeben ist. Es wurde erkannt, dass besonders ab einer solchen Rückspeisegrenze ein Kostensprung auftreten kann, der hierdurch vermieden wird.

Besonders bevorzugt wird aber vorgeschlagen, dass abhängig von den Nutzungskosten ein Zeitraum für die Austauschleistung bestimmt wird. Ein solcher Zeitraum kann vorteilhaft dann gewählt werden, wenn ein hoher Bedarf an einer solchen Austauschleistung besteht und durch diesen hohen Bedarf hohe Kosten gerechtfertigt wären.

Ein Bedarf an wenigstens einer Systemdienstleistung zum elektrischen Stützen des elektrischen Versorgungsnetzes kann ebenfalls eine Steuerrandbedingung sein. Besonders wird hier vorgeschlagen, dass, je mehr Austauschleistung und/oder je stärkere Veränderung des Summenladezustands gesteuert wird, desto größer der Bedarf an einer entsprechenden Systemdienstleistung ist. Vorzugsweise werden hierfür Systemdienstleistungen in Kategorien unterteilt. Besonders eine Unterteilung in eine erste Kategorie, die stabilitätsrelevante Systemdienstleistungen betrifft, und eine zweite Kategorie, die Systemdienstleistungen zur Kostenminimierung betrifft, wird vorgeschlagen.

Eine Systemdienstleistung ist insoweit eine Dienstleistung, bei der elektrische Leistung in das elektrische Versorgungsnetz eingespeist wird, aus ihr entnommen wird oder zumindest für diese Zwecke angeboten wird, die zum Stützen oder Unterstützen des elektrischen Versorgungsnetzes verwendet werden kann.

Gemäß einer Ausführungsform wird vorgeschlagen, dass zusätzlich zu den elektrischen Speichern der Elektrofahrzeuge wenigstens ein stationärer elektrischer Speicher mit verwendet wird, der jeweils einen veränderlichen Ladezustand aufweist. Dabei wird der veränderliche Summenladezustand aus der Summe der veränderlichen Ladezustände der Elektrofahrzeuge des Fuhrparks und dem wenigstens einen veränderlichen Ladezustand des wenigstens einen stationären elektrischen Speichers gebildet wird.

Durch einen solchen zusätzlichen elektrischen Speicher, der stationär in dem Fuhrpark angeordnet ist, kann die Austauschleistung erhöht werden. Dadurch kann dem elektrischen Versorgungsnetz mehr variable Austauschleistung angeboten werden. Der Fuhrpark kann gleichzeitig von der Leistungslieferung durch das elektrische Versorgungsnetz unabhängig oder zumindest unabhängiger gemacht werden. Häufig sind Speicher von Elektrofahrzeugen so dimensioniert, dass sie dem Fahrzeug ermöglichen, sein Tagwerk zu verrichten, aber über Nacht geladen werden müssen.

Meist gibt es des nachts Phasen, in denen ausreichend Leistung zum Laden solcher elektrischen Speicher vorhanden ist. Wenn das aber einmal nicht der Fall sein sollte, kann durch einen solchen stationären Speicher in dem Fuhrpark gegebenenfalls - je nach Dimensionierung des stationären Speichers und/oder Anzahl solcher stationären Speicher- auf die Entnahme elektrischer Leistung aus dem Netz ganz oderteilweise verzichtet werden, wenn in diesem Ausnahmefall die elektrische Leistung zumindest teilweise aus dem wenigstens einen stationären Speicher genommen wird.

Gemäß einer Ausführungsform wird vorgeschlagen, dass die Ladeinfrastruktur mehrere Ladeterminals aufweist, jeweils zum Laden und Entladen eines Speichers eines Elektrofahrzeugs. Solche Ladeterminals können auch als Ladepunkte bezeichnet werden und über sie werden die Elektrofahrzeuge jeweils geladen und, soweit Austauschleistung für das elektrische Versorgungsnetz bereitgestellt wird, können sie darüber auch entladen werden, zumindest teilweise. Über diese Ladeterminals bzw. Ladepunkte erfolgt auch eine Ansteuerung des Lade- oder Entladevorgangs.

Optional ist vorgesehen, dass die Ladeterminals örtlich verteilt sind und die Ladeinfrastruktur über mehrere Netzanschlusspunkte mit dem elektrischen Versorgungsnetz verbunden ist. Die Ladeterminals können also beispielsweise sämtlichst auf einem Firmengelände angeordnet und über einen einzigen gemeinsamen Netzanschlusspunkt mit dem elektrischen Versorgungsnetz verbunden sein. Es kommt auch in Betracht, dass die Ladeterminals örtlich verteilt sind, also zumindest zwei Ladeterminals oder zwei Gruppen von Ladeterminals örtlich voneinander getrennt sind, nämlich so weit, dass sie über unterschiedliche Netzanschlusspunkte in das elektrische Versorgungsnetz einspeisen.

Es wurde erkannt, dass dennoch die vorgeschlagene gemeinsame Betrachtung und Steuerung durchgeführt werden kann. Insbesondere kann auch bei einer solchen verteilten, zumindest teilweise verteilten Struktur bzw. Infrastruktur ein Summenladezustand bestimmt werden und für diesen Summenladezustand für den Bereitstellungszeitraum ein Ladezustandsbereich definiert sein. Dadurch kommt eine gemeinsame Bereitstellung von Austauschleistung für das elektrische Versorgungsnetz in Betracht, obwohl mehrere Netzanschlusspunkte vorgesehen sind.

Weiterhin wird vorgeschlagen, dass die Ladeinfrastruktur eine Ladesteuereinheit aufweist zum Steuern des Ladens und Entladens der einzelnen Speicher der Elektrofahrzeuge, gegebenenfalls auch einschließlich des wenigstens einen stationären elektrischen Speichers. Dazu wird vorgeschlagen, dass das Steuern des Ladens bzw. Entladens basierend auf dem in Abhängigkeit vom Ladezustandsbereich vorgegebenen zeitlichen Verlauf des Summenladezustands durchgeführt wird, und dass außerdem oder alternativ das Steuern des Ladens bzw. Entladens basierend auf dem in Abhängigkeit von dem Ladezustandsbereich vorgegebenen zeitlichen Verlauf der Austauschleistung durchgeführt wird.

Es wird somit vorgeschlagen, dass für den gesamten Fuhrpark der Ladezustandsbereich und/oder der Summenladezustand berücksichtigt wird, wobei für die Umsetzung auf die einzelnen elektrischen Speicher, mit oder ohne elektrischen stationären Speicher, die Ladesteuereinheit vorgesehen ist. Diese gilt bzw. arbeitet für die Steuerung als Verteiler und für die Aufnahme von Information als Aggregator. Dadurch ist es nicht nur möglich, diese gemeinsamen Werte, einschließlich einer gemeinsamen vorgegebenen Austauschleistung, gemeinsam für den Fuhrpark anzubieten und das dann auf die einzelnen Elektrofahrzeuge bzw. ihre Speicher anzuwenden, sondern es kann dadurch auch möglich sein, die individuellen Randbedingungen der einzelnen Speicher über diese Ladesteuereinheit zu berücksichtigen. Hier kommt besonders in Betracht, dass die einzelnen elektrischen Speicher unterschiedliche Größen haben können, unterschiedlich alt sein können, also insbesondere unterschiedliche Historie haben können. Die Speicher können also unterschiedlich stark elektrisch abgenutzt sein. Auch unterschiedliche thermische Verhalten solcher Speicher und/oder unterschiedliche Leistungsbegrenzungen solcher elektrischen Speicher können berücksichtigt werden.

Gemäß einer Ausführungsform wird vorgeschlagen, dass das Verfahren dadurch gekennzeichnet ist, dass
- eine bzw. die Ladesteuereinheit der Ladeinfrastruktur in Abhängigkeit prognostizierter Ladezustände der elektrischen Speicher der Elektrofahrzeuge und optional in Abhängigkeit wenigstens jeweils einer weiteren Eigenschaft der elektrischen Speicher den Ladezustandsbereich für den Bereitstellungszeitraum bestimmt, wobei der Bereitstellungszeitraum dabei in der Zukunft liegt,
- der Ladezustandsbereich, ein bzw. der Variationsbereich, und/oder eine bzw. die Austauschvorschrift an einen bzw. den Netzbetreiber oder eine bzw. die Netzsteuereinheit übertragen wird,
- der Netzbetreiber bzw. die Netzsteuereinheit in Abhängigkeit von dem Ladezustandsbereich, dem Variationsbereich bzw. der Austauschvorschrift, die Austauschleistung für den Bereitstellungszeitraum als zeitlichen Ablauf vorgibt, insbesondere als Vorhersage,
- die Ladesteuereinheit die Austauschleistung in dem Bereitstellungszeitraum gemäß dem vorgegebenen zeitlichen Ablauf steuert, indem einzelne Ladeterminals bzw. die einzelnen Ladeterminals entsprechend angesteuert werden, wobei optional
- in Abhängigkeit von dem Ladezustandsbereich, dem Variationsbereich und/oder der Austauschvorschrift und dem Summenladezustand dem elektrischen Versorgungsnetz zusätzliche Wirk- und/oder Blindleistung zur Regelung des elektrischen Versorgungsnetzes angeboten wird.

Somit ist vorgesehen, dass die Ladesteuereinheit zunächst von prognostizierten Ladezuständen der elektrischen Speicher ausgeht. Diese prognostizierten Ladezustände können synonym auch als vorhergesagte Ladezustände oder Ladezuständevorhersage bezeichnet werden. Daraus wird der Ladezustandsbereich für den Bereitstellungszeitraum bestimmt. Dieser Bereitstellungszeitraum liegt insoweit in der Zukunft, es wird also eine Vorhersage bestimmt.

Zusätzlich kann hierbei wenigstens eine weitere Eigenschaft der elektrischen Speicher berücksichtigt werden. Zu einer solchen weiteren Eigenschaft können oben genannte Randbedingungen gehören, wie Speicherkapazität, Alter oder Verschleiß des elektrischen Speichers, etwaige Begrenzungen für Aufnahme und Abgabe von Leistung, und auch Eigenschaften der Peripherie, wie eine Eigenschaft des Ladepunktes. Die Eigenschaft des Ladepunktes kann eine Begrenzung der abgebbaren oder aufnehmbaren Leistung und damit eine Strombegrenzung beinhalten. Das kann besonders insoweit eine Eigenschaft des elektrischen Speichers sein, als ein solcher elektrischer Speicher häufig bei einem Fuhrpark an demselben Ladepunkt angeschlossen wird. Zumindest kommt in Betracht, dass für unterschiedliche Fahrzeuggrößen unterschiedliche Ladepunkte vorgesehen sind.

Es wird dann der Ladezustandsbereich an den Netzbetreiber oder die Netzsteuereinheit übertragen. Stattdessen kann ein Variationsbereich oder die Austauschvorschrift oder eine Kombination daraus an den Netzbetreiber bzw. die Netzsteuereinheit übertragen werden. Besonders ist es vorteilhaft, den Ladezustandsbereich und/oder den Variationsbereich, der einen Teilbereich des Ladezustandsbereichs bildet, zusammen mit der Austauschvorschrift zu übertragen. Die Austauschvorschrift gibt somit an, welcher Zusammenhang zwischen einer zu bestimmenden Austauschleistung und dem Ladezustandsbereich bzw. dem Variationsbereich besteht. Damit wird dem Netzbetreiber bzw. der Netzsteuereinheit ein entsprechendes Planungswerkzeug an die Hand gegeben.

Der Netzbetreiber bzw. die Netzsteuereinheit kann dann abhängig davon die Austauschleistung für den Bereitstellungszeitraum als zeitlichen Ablauf vorgeben. Sie kann die Austauschleistung dafür für den gesamten Bereitstellungszeitraum vorgeben, oder für einen Teil davon. Es kommt auch in Betracht, dass sie die Austauschleistung für den gesamten Bereitstellungszeitraum als Verlauf vorgibt, dieser Verlauf aber für einen Teil des Bereitstellungszeitraums veränderlich ist, insbesondere *ad hoc* verändert werden kann. Dieser Zeitverlauf der Austauschleistung wird insbesondere als Vorhersage vorgegeben. Der Netzbetreiber bzw. die Netzsteuereinheit kann dadurch Planungssicherheit für das elektrische Versorgungsnetz erreichen. Der Fuhrpark kann dadurch Planungssicherheit für seine Beschaffungskosten erreichen, wobei sichergestellt ist, dass zum Ende des Bereitstellungszeitraums, wenn die Elektrofahrzeuge also zu Beginn eines neuen Tages ihr Tagwerk verrichten sollen, diese ausreichend Ladung in ihren Speichern haben.

Besonders ist vorgesehen, dass der Netzbetreiber bzw. die Netzsteuereinheit durch den Ladezustandsbereich, Variationsbereich bzw. Austauschvorschrift Kenntnis über zur Verfügung stehende Speicherkapazitäten des Fuhrparks hat. Zusätzlich hat ein Netzbetreiber bzw. eine solche Netzsteuereinheit Kenntnis über Bedarf und Angebot elektrischer Leistung im elektrischen Versorgungsnetz, besonders auch in zeitlicher Hinsicht. Der Netzbetreiber bzw. die Netzsteuereinheit kann dann in Kenntnis von Bedarf und Angebot im elektrischen Versorgungsnetz und in Kenntnis des Speicherpotentials des Fuhrparks vorteilhafte Werte für die Austauschleistung, insbesondere den genannten Verlauf der Austauschleistung vorgeben.

Es kann dann, nämlich insbesondere zur Umsetzung dieser vorgegebenen Austauschleistung, die Ladesteuereinheit, die Austauschleistung in dem Bereitstellungszeitraum gemäß dem vorgegebenen zeitlichen Ablauf steuern, indem die einzelnen Ladeterminals entsprechend angesteuert werden. Die Ladesteuereinheit verteilt somit die zentrale Vorgabe der Austauschleistung auf die einzelnen Ladeterminals, die auch als Ladepunkte bezeichnet werden können, und steuert dadurch die Ladung bzw. Entladung der jeweiligen Speicher. Das kann auch als Steuerung eines Ladezyklus bezeichnet werden. Natürlich kommt auch in Betracht, dass die jeweils konkrete Ladesteuerung eines elektrischen Speichers nicht physikalisch an dem Ladeterminal angeordnet ist, sondern im Fahrzeug. Eine Kommunikation zur Ladesteuereinheit erfolgt dennoch über das betreffende Ladeterminal.

Optional wird vorgeschlagen, dass in Abhängigkeit von dem Ladezustandsbereich, dem Variationsbereich und/oder der Austauschvorschrift und zusätzlich in Abhängigkeit von dem Summenladezustand dem elektrischen Versorgungsnetz Wirk- und/oder Blindleistung zur Regelung des elektrischen Versorgungsnetzes angeboten wird.

Hier wurde besonders erkannt, dass eine Blindleistungseinspeisung oder -entnahme zur Spannungsregelung bereitgestellt werden kann. Eine solche Blindleistungsbereitstellung erfordert dabei nur eine gewisse Mindestenergiemenge, die häufig in ausreichendem Maße vorhanden ist. Die Blindleistungseinspeisung erfordert aber auch entsprechende Kapazitäten für die Stromeinspeisung. Das kann bei dem Anbieten der Blindleistungseinspeisung berücksichtigt werden.

Die Austauschleistung ist grundsätzlich als Wirkleistung zu verstehen. Sie kann zum Steuern und auch Stützen des elektrischen Versorgungsnetzes eingespeist werden. Hier wird aber vorgeschlagen, zusätzliche Wirk- und/oder Blindleistung anzubieten. Besonders kann hier kurzzeitig Wirkleistung angeboten werden. Solche zusätzliche Wirkleistung wird vorzugsweise in einem zeitlichen Bereich von weniger als einer Minute, insbesondere weniger als zehn Sekunden angeboten. Eine solche kurzzeitige Wirkleistungseinspeisung, die hier bevorzugt angeboten wird, kann insbesondere im Falle eines spontan auftretenden Netzfehlers ebenso spontan angeboten werden. Es wird also vorgeschlagen, im Falle eines Netzfehlers elektrische Wirkleistung anzubieten, insbesondere kurzzeitig anzubieten.

Das Verfahren bietet besonders folgende Aspekte. Die Ladesteuereinheit der Ladeinfrastruktur kann auch als Aggregator bezeichnet werden bzw. zumindest teilweise als Aggregator fungieren. Ein solcher Aggregator aggregiert technisch die potentiellen Variationen der Ladezustände der einzelnen elektrischen Speicher der Fahrzeuge, die auch als Batterie bezeichnet werden können, zu dem Ladezustandsbereich, der somit einen Flexraum bildet. Das kann als Aggregieren der elektrischen Speicher bzw. Batterien bezeichnet werden. Bei dem Aggregieren der Batterien kann die Peripherie wie die Ladeinfrastruktur und dabei insbesondere die Ladeterminals mit einbezogen werden. Dieser Ladezustandsbereich, der somit diesen Flexraum bildet, kann insbesondere für einen Tag in die Zukunft bestimmt und entsprechend als Vorhersage übermittelt werden.

Darauf aufbauend kann der Netzbetreiber oder eine Steuereinheit, die auch mit einem Stromeinkäufer oder Direktvermarkter zusammenarbeiten können, etwa einen Tag vorher basierend auf diesem Flexraum, also basierend auf dem Ladezustandsbereich, entsprechende Energiemengen bestimmen, und einen Verlauf für die Austauschleistung vorgeben, was auch als Stromfahrplan bezeichnet bzw. vorgegeben werden kann. Die Energiemengen können entsprechend auch als Leistungskontingente für Zeitabschnitte betrachtet werden.

Bei der Umsetzung, wenn also der Zeitraum, für den die Vorhersage gemacht wurde, erreicht und durchfahren wird, regelt die Ladesteuereinheit bzw. der Aggregator den Stromfahrplan aus. Er orientiert sich also an dem Stromfahrplan bzw. dem vorgegebenen Verlauf der Austauschleistung und versucht diesen bei den einzelnen elektrischen Speichern umzusetzen. Gleichzeitig wird der jeweilige Ladezustand der einzelnen Speicher erfasst und dabei insbesondere auch der Summenladezustand. Diese einzelnen Ladezustände bzw. der Summenladezustand müssen letztlich einem Verlauf folgen oder zumindest zum Ende des Bereitstellungszeitraums einen vorgegebenen Endwert erreichen, zumindest einen Mindestwert erreichen, und das wird durch den Aggregator ausgeregelt.

Führen also geringe Abweichungen zwischen der Planung und dem tatsächlichen Verhalten der elektrischen Speicher dazu, dass der jeweilige Ladezustand nicht erreicht wird oder überschritten wird, kann durch entsprechende Regelung ausgeglichen werden. Es wird dann also gegebenenfalls etwas mehr oder etwas weniger Strom fließen bzw. etwas mehr oder etwas weniger Austauschleistung ausgetauscht werden als gemäß der Vorhersage bestimmt wurde. Dabei ist aber von geringen, für die Netzplanung unwesentlichen Abweichungen auszugehen.

Wie oben beschrieben, wurde erkannt, dass es ein Ziel sein kann, möglichst keine Ausgleichsenergie zu beziehen und wenn doch, diese zu einem möglichst günstigen Preis zu beziehen. In der Praxis kann es z.B. sein, dass 90% Summenladezustand angestrebt werden, aber für 95% eingekauft wird. Kommt es zu einer positiven Abweichung der benötigten Energie von 5 %, dann erreicht die Summe nur 90%, was ausreichend ist. Wird weniger Energie benötigt, erreicht der Summenladezustand 100%. Am nächsten Tag wird dann weniger oder mehr Energie eingekauft, sodass man immer 5% über den Minimalladezustand landet und bei energetischen Abweichungen trotzdem den Fahrplan einhält. Ausgleichsenergie ist also diejenige Energie, die das elektrische Versorgungsnetz über eine angekündigte Energie hinaus bereitstellen muss. Solche Energie ist somit nicht eingeplant und wird daher regelmäßig zu einem hohen Preis bereitgestellt. Das soll vermieden werden. Zu viel Energie einzukaufen ist aber ebenfalls keine Lösung, denn auch eine Nichtabnahme von Energie kann teuer sein. Idealerweise sollte so gut wie möglich geplant werden, oder Puffer in den elektrischen Speichern ausgenutzt werden.

Hier ist von einer hohen Regelgüte auszugehen und es braucht netzseitig kaum Reserveleistung vorgehalten zu werden oder eine Ausgleichsenergie beschafft zu werden, die für etwaige kleine Abweichungen vom Stromfahrplan notwendig wäre.

Es können trotz Vorgabe der Austauschleistung bzw. des Stromfahrplans Flexibilitäten bleiben, um die die Austauschleistung schwanken kann. Im Rahmen solcher Flexibilitäten können, auch im Sinne eines Stromhandels, positive oder negative Austauschleistungen angeboten werden, auch kurzfristig angeboten werden, z.B. innerhalb einer Stunde oder kürzer.

Die Ladesteuereinheit bzw. der Aggregator kann somit technisch verbleibende Flexibilitäten direkt dem Netzbetreiber oder einer Steuereinheit anbieten. Dazu gehören Regelleistungen, also insbesondere Wirkleistung, die kurzzeitig bereitgestellt werden können, auch eine Blindleistungsbereitstellung gehört dazu und andere Systemdienstleistungen.

Vorzugsweise wird vorgeschlagen, im Rahmen der Flexibilität, die durch den angebotenen Ladezustandsbereich besteht, einer niederfrequenten Leistungsschwingung im elektrischen Versorgungsnetz durch dazu antizyklischer Leistungseinspeisung entgegenzuwirken.

Vorzugsweise wird vorgeschlagen, dass die Ladesteuereinheit die einzelnen Speicher der Elektrofahrzeuge und optional wenigstens einen stationären Speicher, sofern vorhanden, in Abhängigkeit von wenigstens einer Steuerrandbedingung ansteuert. Dazu kommen folgende Steuerrandbedingungen in Betracht.

Eine Steuerrandbedingung kann die Speichergröße des jeweiligen Speichers bilden. Insbesondere bei der Aufteilung der Austauschleistung kann dadurch berücksichtigt werden, welchen Anteil der jeweilige Speicher an dieser Austauschleistung haben kann.

Eine weitere Steuerrandbedingung kann jeweils die Lade- und Entladecharakteristik des Speichers bilden. Eine solche Lade- und Entladecharakteristik ist insbesondere ein Zusammenhang zwischen Lade- und Entladezyklen einerseits und einer zu erwartenden Lebensdauer andererseits. Die Lade- und Entladecharakteristik kann somit beispielsweise aussagen, ob der Speicher durch ein geringes Laden und Entladen, also beispielsweise nur um 10 oder 20 %, um zwei einfache Beispiele zu nennen, geschädigt werden kann. Je nach Charakteristik kann ein solcher Speicher nämlich mehr oder weniger tolerant gegenüber solchen Ladezyklen mit geringer Austauschleistung sein.

Besonders kann der Speicher je nach Ladezustand, Verschleißfortschritt, was auch als "health index" bezeichnet werden kann, je nach Temperatur und je nach erlaubtem Verschleiß, eine Leistung abgeben und eine andere Leistung aufnehmen. Auch der Ladepunkt, der also angibt, bis wohin der Speicher noch aufgeladen werden kann, ist technisch beschränkt. Daraus kann sich eine maximale Leistung ergeben, die von dem Ladezustand, derzeit, der Temperatur, dem "health index" und Kosten abhängen kann. Und es kann sich daraus auch eine minimale Leistung ergeben.

Ein Verschleißindikator kann eine weitere Steuerrandbedingung bilden, der jeweils abhängig von durchgeführten Lade- und Entladezyklen und/oder abhängig von einem zeitlichen Verlauf des jeweiligen Ladezustands einen Verschleiß des Speichers quantifiziert. Besonders kann dadurch im Laufe der Zeit angepasst werden, wie viel Leistung dieser Speicher abgeben und aufnehmen kann, wie groß überhaupt seine Ladekapazität ist, und wie sich die Kosten für einen Ladezyklus dadurch ändern können. Auch das kann also die Ladesteuereinheit für den jeweiligen Speicher berücksichtigen.

Eine Speicherqualität des jeweiligen Speichers kann ebenfalls eine Steuerrandbedingung sein. Eine Speicherqualität des jeweiligen Speichers kann Lade- und Entladeeigenschaften beinhalten, wie auch die Frage, wie weit der Speicher entladen und wie weit er geladen werden kann. Je höher die Speicherqualität ist, umso näher kann der Speicher beim Entladen an den Wert 0 % heranreichen und beim Laden an den Wert 100 %, ohne dabei Schaden zu erleiden oder sehr ineffizient zu werden.

Ein Ort des betreffenden Ladeterminals, also Ladepunktes, an dem der betreffende Speicher geladen wird, kann ebenfalls eine Steuerrandbedingung bilden. Besonders die Entfernung des Ladeterminals zu einem Netzanschlusspunkt, über den die Austauschleistung oder ein Teil davon mit dem Netz ausgetauscht wird, sowie auch eine Entfernung zu dem nächsten Ladeterminal kann dabei ein Kriterium sein. Beispielsweise kann ein Ladeterminal umso effizienter betrieben werden, je näher es an einem Netzanschlusspunkt angeordnet ist. Auch die Frage, ob ein Ladeterminal weitere benachbarte Ladeterminals hat, mit denen zusammen es über einen gemeinsamen Anschlussstrang mit einem elektrischen Versorgungsnetz verbunden ist, kann Einfluss auf die Effizienz des Ladeterminals haben.

Eine Prognose über einen Ladezustand kann eine weitere Steuerrandbedingung bilden. Insbesondere betrifft dies eine Prognose über einen Verlauf oder Endwert des Ladezustandes jeweils eines Speichers während einer Benutzung des betreffenden Elektrofahrzeugs außerhalb der Ladestation, insbesondere in Abhängigkeit von einem Fahrplan des Elektrofahrzeugs. Darüber kann vorhergesagt oder abgeschätzt werden, welchen Wert der Ladezustand aufweist, wenn das Elektrofahrzeug mit seinem Speicher zu Beginn des Bereitstellungszeitraums an ein Ladeterminal bzw. einen Ladepunkt angeschlossen wird. Das kann nicht nur für die Berechnung des Ladezustandsraums berücksichtigt werden, sondern auch für die Ansteuerung der jeweiligen Speicher. Hier liegt auch die ergänzende Überlegung zugrunde, dass ein exakter Ladezustand eines elektrischen Speichers nicht ohne Weiteres bestimmbar ist bzw. Ungenauigkeiten aufweisen kann. Ist der Verlauf des Ladezustandes oder sein Endwert über eine Prognose zusätzlich abschätzbar, kann das gegebenenfalls die Genauigkeit erhöhen.

Als eine weitere Steuerrandbedingung wird eine Prognose über eine Ankunftszeit jeweils eines Elektrofahrzeugs nach einer Benutzung des betreffenden Elektrofahrzeugs außerhalb der Ladestation vorgeschlagen, insbesondere in Abhängigkeit von einem Fahrplan des Elektrofahrzeugs. Auch hierdurch kann vorhergesagt werden, wann das jeweilige Fahrzeug ankommt und damit, wann der entsprechende Speicher zur Verfügung steht, um mit seinem Ladezustand einen Teil des Summenladezustands zu bilden. Die Ankunftszeit kann besonders von einem Fahrplan des Elektrofahrzeugs abhängen, wobei regelmäßig davon ausgegangen werden kann, dass ein solcher Fahrplan, z. B. aufgrund von Verkehrssituationen, nicht genau eingehalten werden kann. Solche Abweichungen können in einer Prognose über die Ankunftszeit, die auch als Vorhersage bezeichnet werden kann, berücksichtigt werden. Sie kann jeden Tag aufs Neue geprüft werden, um die Prognose dann jeweils anzupassen und dadurch zu verbessern.

Jeweils eine Prognose oder Vorgabe über einen Ladezustand des elektrischen Speichers zum Ende des Bereitstellungszeitraums wird als eine weitere Steuerrandbedingung vorgeschlagen. Hierdurch kann der Endwert des Ladezustandsraums abgeschätzt werden und/oder vorgegeben werden. Besonders wird ein Mindestwert vorgegeben; wenn sich beispielsweise der Fahrplan des Fuhrparks oder einzelner Elektrofahrzeuge ändert, kann hier auch eine Anpassung vorgenommen werden, indem der Mindestwert erhöht oder verringert wird. Besonders für Werte oberhalb eines solchen Mindestwertes, der vorgegeben wird und eingehalten werden sollte, kann eine Prognose bzw. Vorhersage gemacht werden. Dadurch kann sich die Obergrenze des Ladezustandsbereichs verändern.

Jeweils eine Abfahrtszeit eines Elektrofahrzeugs kann als eine Steuerrandbedingung berücksichtigt werden. Eine solche Abfahrtszeit des Elektrofahrzeugs gibt die Zeit an, zu der das betreffende Elektrofahrzeug die Ladestation verlässt. Diese Abfahrtszeit kann insbesondere einem für das betreffende Elektrofahrzeug relevanten Fahrplan entnommen werden. Hier ist auch ein Gedanke, dass ein solcher Fahrplan grundsätzlich vorhanden ist und es wird vorgeschlagen, diesen für das Verfahren, insbesondere zur Verbesserung des Verfahrens, mit einzusetzen.

Jeweils eine Ladeleistung eines Speichers eines Elektrofahrzeugs wird als Steuerrandbedingung vorgeschlagen. Eine solche Ladeleistung eines Speichers bezeichnet die Leistung, die der Speicher innerhalb des Bereitstellungszeitraums abgegeben und aufgenommen hat. Daraus kann die Belastung des Speichers abgelesen werden und dies kann bei der Ansteuerung berücksichtigt werden, besonders so, dass Speicher mit hoher Ladeleistung weniger angesteuert werden als solche mit geringer Ladeleistung. Das kann sich vorzugsweise von einem zum nächsten Tag auch ändern.

Außerdem wird vorgeschlagen, jeweils eine Historie über Ladezyklen eines Speichers, die der Speicher bisher durchgeführt hat, als Steuerrandbedingung zu berücksichtigen. Aus einer solchen Historie über Ladezyklen kann sich eine Belastung des Speichers ableiten lassen. Es kann dann abgeschätzt werden, wie belastbar der Speicher noch ist und wie belastbar er in Zukunft noch sein wird. Entsprechend kann der Speicher ggf. geschont werden und es kann erreicht werden, dass die Speicher innerhalb eines Fuhrparks gleichmäßig verschleißen.

Erfindungsgemäß wird auch eine Ladeinfrastruktur für mehrere Elektrofahrzeuge eines Fuhrparks zum Bereitstellen elektrischer Austauschleistung der Elektrofahrzeuge zum Einspeisen in ein elektrisches Versorgungsnetz, oder zum Entnehmen aus dem elektrischen Versorgungsnetz, vorgeschlagen. Eine solche Ladeinfrastruktur ist dadurch gekennzeichnet, dass
- eine positive Austauschleistung eine von dem Fuhrpark aus dem elektrischen Versorgungsnetz entnommene elektrische Leistung bezeichnet und
- eine negative Austauschleistung eine von dem Fuhrpark in das elektrische Versorgungsnetz eingespeiste elektrische Leistung bezeichnet, und wobei
- jedes Elektrofahrzeug einen elektrischen Speicher mit einem veränderlichen Ladezustand aufweist, und für jedes Elektrofahrzeug ein Ladeterminal vorgesehen ist, um den Speicher des Elektrofahrzeugs zu laden, oder zu entladen, und
- die Summe der veränderlichen Ladezustände der Elektrofahrzeuge des Fuhrparks, und ggf. weiterer veränderlicher Ladezustände weiterer Speicher, einen veränderlichen Summenladezustand bildet, wobei
- eine Ladesteuereinheit vorgesehen ist, die die Ladeterminals ansteuert, und für einen Bereitstellungszeitraum einen Ladezustandsbereich bestimmt, der einen Betriebsbereich aufspannt, in dem der Summenladezustand liegen soll, wobei der Ladezustandsbereich gekennzeichnet ist,
- durch eine zeitabhängige Obergrenze, die zeitabhängig Maximalwerte für den Summenladezustand vorgibt, die nicht überschritten werden sollen, und
- durch eine zeitabhängige Untergrenze, die zeitabhängig Minimalwerte für den Summenladezustand vorgibt, die nicht unterschritten werden sollen, und wobei
- die Ladesteuereinheit den Ladezustandsbereich in Abhängigkeit der Ladezustände der Elektrofahrzeuge bestimmt, und wobei
- die Ladeinfrastruktur, insbesondere die Ladesteuereinheit in dem Bereitstellungszeitraum die elektrische Austauschleistung so steuert, dass der Summenladezustand den Ladezustandsbereich nicht verlässt.

Eine solche Ladeinfrastruktur weist mehrere Ladeterminals auf, nämlich für jedes Elektrofahrzeug eines. Über ein solches Ladeterminal kann Leistung in den Speicher des Elektrofahrzeugs eingegeben werden, um den Speicher zu laden, und aus ihm entnommen werden, um ihn zu entladen. Dazu kann die Leistung von dem Ladeterminal weiter mit dem elektrischen Versorgungsnetz ausgetauscht werden.

Außerdem ist eine Ladesteuereinheit vorgesehen, die die Ladeterminals ansteuert und für einen Bereitstellungszeitraum einen Ladezustandsbereich bestimmt. Dazu sind Steuerverbindungen zwischen der Ladesteuereinheit und jedem Ladeterminal vorgesehen. Diese können kabelgebunden oder kabellos ausgeführt sein. Sie können auch gebündelt zu mehreren zu einer Gruppe gruppierter Ladeterminals geführt sein. Jedenfalls sind sie so auszuführen, dass die Ladesteuereinheit die Ladeterminals und damit die elektrischen Speicher der Elektrofahrzeuge ansteuern kann, wenn die Elektrofahrzeuge mit ihren elektrischen Speichern mit diesen Ladeterminals verbunden sind.

Insgesamt ist somit die Ladeinfrastruktur mit ihrer Ladesteuereinheit und ihren Ladeterminals nebst zugeordneten Elektrofahrzeugen dazu vorbereitet, ein Verfahren gemäß wenigstens einer vorstehend beschriebenen Ausführungsform auszuführen. Vorzugsweise weist die Ladeinfrastruktur auch wenigstens ein Ladeterminal für einen stationären elektrischen Speicher auf, und/oder sie weist diesen elektrischen Speicher unmittelbar auf, sodass er unmittelbar bzw. direkt von der Ladesteuereinheit angesteuert werden kann.

Außerdem weist die Ladeinfrastruktur wenigstens einen Netzanschlusspunkt auf, um die Ladeterminals mit dem elektrischen Versorgungsnetz zu verbinden.

Das Verfahren wird insbesondere mittels der Ladesteuereinheit ganz oder teilweise durchgeführt. Insoweit ein Netzbetreiber oder eine Netzsteuereinheit Verfahrensschritte durchführen, kommuniziert die Ladesteuereinheit direkt oder indirekt mit diesem Netzbetreiber bzw. dieser Netzsteuereinheit. Insbesondere kommuniziert die Ladesteuereinheit derart, dass sie Informationen zum Ladezustandsraum, was auch eine Vorhersage beinhalten kann, und/oder Informationen zu dem Summenladezustand, was auch eine Vorhersage beinhalten kann, an den Netzbetreiber bzw. die Netzsteuereinheit überträgt.

Insbesondere empfängt die Ladesteuereinheit von dem Netzbetreiber bzw. der Netzsteuereinheit Informationen über vorgesehene Austauschleistungswerte, insbesondere Informationen über einen vorgesehenen Verlauf der Austauschleistung über den Bereitstellungszeitraum. Diese Information kann die Ladesteuereinheit dann auf die einzelnen Ladeterminals zur Umsetzung verteilen.

Die Erfindung wird nun nachfolgend unter Bezugnahme auf die begleitenden Figuren beispielhaft näher erläutert.
- Figur 1: zeigt ein Ablaufschema zum Veranschaulichen des vorgeschlagenen Verfahrens.
- Figur 2: zeigt einen Ausschnitt des Ablaufschemas der Figur 1 zur Veranschaulichung eines Ladezustandsbereichs und seiner Anwendung.
- Figur 3: zeigt einen Fuhrpark mit Ladeinfrastruktur schematisch.

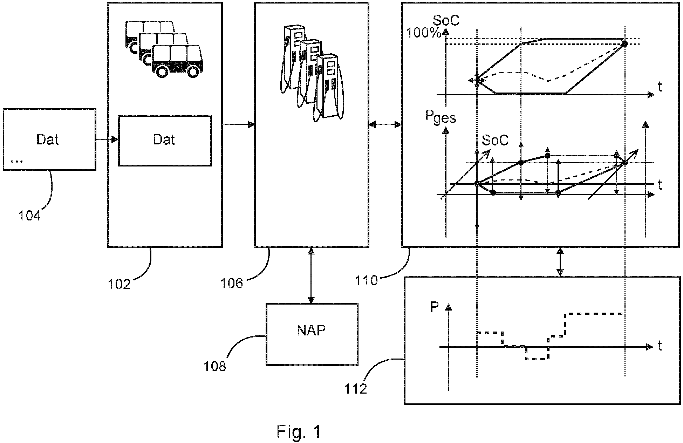

Das Ablaufschema der Figur 1 soll den grundsätzlichen Ablauf des vorgeschlagenen Verfahrens erläutern. Ein Gedanke bei dem Verfahren ist es, Speicherkapazitäten eines Fuhrparks mit Elektrofahrzeugen auszunutzen, um damit bedarfsabhängig Leistung vorübergehend einem elektrischen Versorgungsnetz zur Verfügung zu stellen und auch das Entnehmen elektrischer Leistung aus dem Versorgungsnetz zum Laden der Speicher der Elektrofahrzeuge des Fuhrparks unter Berücksichtigung des elektrischen Versorgungsnetzes gezielt zu steuern. Mit dem Verfahren kann auch eine Strompreisoptimierung erreicht werden. Der Fuhrpark kann also so gesteuert werden, dass er den benötigten Ladestrom möglichst günstig bezieht und dabei die technischen Randbedingungen einhält. Besonders wurde erkannt, dass es dafür auf eine gute Planung der technischen Ressourcen ankommt, und die kann durch das vorgeschlagene Verfahren erreicht werden.

Der Fuhrpark der Elektrofahrzeuge wird durch den Fuhrparkblock 102 repräsentiert. Der Fuhrparkblock beinhaltet dabei Informationen zu den Elektrofahrzeugen. Diese Informationen beinhalten Informationen über die Speicher des jeweiligen Elektrofahrzeugs, nämlich detaillierte Information, also für jeden Speicher jedes Elektrofahrzeugs einzeln. Ebenso sind Informationen zu Ladezuständen der elektrischen Speicher enthalten, die der jeweilige Speicher aufweisen sollte, bevor das Elektrofahrzeug, besonders morgens, startet. Hier liegt auch besonders der Gedanke zugrunde, dass der Fuhrpark der Elektrofahrzeuge für vergleichsweise gut geplante Aufgaben eingesetzt wird, wie beispielsweise als Elektrobus eines Verkehrsbetriebs zum Durchführen eines öffentlichen Personennahverkehrs, um nur ein Beispiel zu nennen.

Entsprechend können in dem Fuhrparkblock 102 Informationen zu Abfahrtszeiten der jeweiligen Elektrofahrzeuge bekannt sein. Die Abfahrtszeiten bestimmen besonders, wann der Ladezustand des jeweiligen Speichers erreicht sein muss. Die Abfahrtszeit bestimmt aber auch, ab wann der Speicher des entsprechenden Elektrofahrzeugs nicht mehr ans elektrische Versorgungsnetz angeschlossen ist.

Der Fuhrparkblock kann aber auch Informationen darüber enthalten, welche maximale Ladeleistung oder maximale Entladeleistung jeder der Speicher jeweils hat. Diese genannten Informationen können in dem Fuhrparkblock 102 gespeichert sein, wobei sie auch aktualisiert werden können.

Darüber hinaus ist ein Eingangsdatenblock 104 veranschaulichend dargestellt. Dieser Eingangsdatenblock 104 beinhaltet besonders Informationen bzw. Daten, die stark veränderlich sind, insbesondere solche, die sich täglich ändern können und/oder täglich aktualisiert werden können. Dazu gehört ein Fahrplan für die Elektrofahrzeuge, wenn ein solcher vorhanden ist, der als Busfahrplan vorhanden sein kann, wenn die Elektrofahrzeuge des Fuhrparks Elektrobusse sind. Aber auch Wetterdaten, insbesondere eine Wettervorhersage, können durch diesen Eingangsdatenblock 104 bereitgestellt werden. Solche Daten werden in den Fuhrparkblock 102 eingegeben und können mit den in dem Fuhrparkblock 102 vorhandenen Daten zusammengeführt bzw. zusammen verrechnet werden. Dabei kann sich aus solchen Eingangsdaten wie dem Busfahrplan eine Zeit berechnen lassen oder zumindest abschätzen lassen, wann das jeweilige Elektrofahrzeug in dem Fuhrpark ankommt und dann zum Aufnehmen elektrischer Leistung aus dem elektrischen Versorgungsnetz, oder zum Abgeben elektrischer Leistung an das elektrische Versorgungsnetz bereitsteht.

Auch ein Ladezustand jedes Elektrospeichers zu dem Zeitpunkt, wenn das entsprechende Elektrofahrzeug am Fuhrpark ankommt, kann berechnet werden. Dazu können die Daten des Eingangsdatenblocks 104 verwendet werden und zusätzlich aus vorhanden Daten des Fuhrparkblocks 102 weitere Daten errechnet werden, wie insbesondere der Ladezustand oder zu erwartende Ladezustand des Elektrofahrzeugs, wenn es in dem Fuhrpark ankommt. Für diese Berechnung kann insbesondere eine Kenntnis über den Speicher, besonders wie groß er ist, verwendet werden. Diese Information wird dann aus dem Fuhrparkblock 102 genommen.

Auf diese Art und Weise wird vorgeschlagen, dass eine Prognose oder Vorhersage erstellt wird. Auch das kann in dem Fuhrparkblock 102 erfolgen. Es sei an dieser Stelle angemerkt, dass das Verfahren grundsätzlich auch anders umgesetzt werden kann, als dass unbedingt die erläuterten Blöcke verwendet werden, wie der Fuhrparkblock 102 und der Eingangsdatenblock 104. Diese Blöcke können beispielsweise auch anderweitig verknüpft sein, oder es können mehrere Eingangsschnittstellen vorhanden sein, um entsprechende Eingangsdaten zu empfangen. Beispielsweise kann es zweckmäßig sein, eine Wettervorhersage aus einer anderen Quelle zu erhalten als den Busfahrplan bzw. einen anderen Fahrplan. Insoweit dient das Ablaufschema der Figur 1 zur grundsätzlichen Erläuterung.

Die Prognose oder Vorhersage kann dann an eine Ladeinfrastruktur des Fuhrparks gegeben werden. Diese Ladeinfrastruktur wird durch den Infrastrukturblock 106 repräsentiert. Der Infrastrukturblock 106 kann dabei Informationen zur Ladeinfrastruktur enthalten, nämlich insbesondere eine maximale Ladeleistung, die durch entsprechende Ladeterminals vorgegeben sein kann. Diese Ladeterminals sind ebenfalls Teil der Ladeinfrastruktur. Auch eine Verfügbarkeit der Elektrospeicher kann in dem Infrastrukturblock 106 bekannt sein, besonders dadurch, dass die Ladeterminals jeweils die Information bereitstellen, ob an ihnen ein Elektrofahrzeug angeschlossen ist, gegebenenfalls auch was für eines bzw. was für ein Speicher.

Teilweise ergeben sich diese Daten auch aus den elektrischen Speichern und damit können die Daten gegebenenfalls von dem Fuhrparkblock 102 erhalten werden.

Der Infrastrukturblock 106 erhält außerdem die Vorhersagedaten, nämlich die jeweiligen Ankunftszeiten der Elektrofahrzeuge an den Ladeterminals und ebenfalls die einzelnen Ladezustände der Elektrofahrzeuge, sobald sie an den Ladestationen ankommen und angeschlossen werden. Diese Daten werden als Vorhersage übermittelt und weiter verarbeitet.

Außerdem ist ein Netzanschlussblock 108 vorgesehen, der besonders Informationen über das elektrische Versorgungsnetz und über verwendete Netzanschlusspunkte zur Verfügung stellen kann. Die Netzanschlusspunkte sind diejenigen, über die die Ladeterminals letztlich mit dem elektrischen Versorgungsnetz verbunden sind. Dabei kann die Ladeinfrastruktur über einen oder mehrere Netzanschlusspunkte mit dem elektrischen Versorgungsnetz verbunden sein.

Der Netzanschlussblock 108 kann Daten über eine maximale Einspeiseleistung, eine Sollspannung und eine Sollblindleistung bereitstellen. Die maximale Leistung, die auch als maximale Austauschleistung bezeichnet werden kann, ist diejenige Leistung, die maximal in das Netz eingespeist werden kann, oder die maximal aus dem elektrischen Versorgungsnetz entnommen werden kann. Die Sollspannung ist besonders eine Spannung des elektrischen Versorgungsnetzes an dem jeweiligen Netzanschlusspunkt. Eine Sollblindleistung kann eine Blindleistung sein, die von einem Netzbetreiber vorgegeben wird und/oder eine, die sich aus Daten des elektrischen Versorgungsnetzes ergibt. Darunter kann eine Höhe der einzuspeisenden Blindleistung fallen, die in Abhängigkeit von der aktuellen Netzspannung bestimmt werden kann.

All diese Daten können bereitgestellt werden, nämlich gemäß dem Ablaufschema der Figur 1 an den Infrastrukturblock 106. Aber auch hier muss nicht unbedingt eine solche Blockaufteilung erfolgen.

Der Netzanschlussblock 108 veranschaulicht zudem, dass sowohl die von den Elektrofahrzeugen bzw. ihren Speichern bereitstellbare Leistung, nämlich Wirkleistung, als auch eine bereitstellbare Blindleistung an den einen bzw. die mehreren Netzanschlusspunkte abgegeben wird, um darüber in das elektrische Versorgungsnetz eingespeist zu werden bzw. aus dem elektrischen Versorgungsnetz entnommen zu werden.

Aus diesen Daten kann, besonders in dem Infrastrukturblock 106, eine maximale Austauschleistung zum maximalen Austausch mit dem elektrischen Versorgungsnetz bestimmt bzw. aufgenommen werden. Es kann auch eine maximal verfügbare Wirkleistung bestimmt werden. Diese kann besonders von den Ladezuständen der Elektrofahrzeuge abhängen. Gleiches gilt für die verfügbare Blindleistung, die zwar wenig Speicherkapazität der Elektrospeicher benötigt, aber dennoch zumindest ein wenig Speicherkapazität benötigt und zudem auch freie Kapazitäten zum Einspeisen entsprechenden Stromes in das elektrische Versorgungsnetz benötigt.

Zur Koordinierung der einzelnen Speicher der Elektrofahrzeuge des Fuhrparks, um dann aber eine gemeinsame Austauschleistung des Fuhrparks dem elektrischen Versorgungsnetz anbieten zu können, ist besonders eine Ladesteuereinheit vorgesehen, die auch als Aggregator bezeichnet werden kann bzw. einen Aggregator enthalten kann.

Mit den vorstehend erläuterten Informationen erstellt diese Ladesteuereinheit bzw. der Aggregator einen Ladezustandsbereich. Das wird in dem Aggregationsblock 110 veranschaulicht.

Durch den Aggregator, repräsentiert durch den Aggregationsblock 110, werden all diese Informationen, die vorstehend zu Figur 1 erläutert wurden, verwendet, um einen Ladezustandsbereich zu bestimmen. Besonders wird vorgeschlagen, eine Vorhersage für einen solchen Ladezustandsbereich zu bestimmen. Ein Ladezustandsbereich wird als Bereich oder Band über den Summenladezustand und die Zeit aufgespannt. Das ist im oberen Diagramm im Aggregationsblock 110 angedeutet. Dort ist der Summenladezustand an der Ordinate über die Zeit an der Abszisse aufgetragen. Der Ladezustandsbereich wird dabei durch eine Obergrenze und eine Untergrenze gebildet. In diesem Bereich, also zwischen dieser Obergrenze und der Untergrenze, verläuft der Summenladezustand.

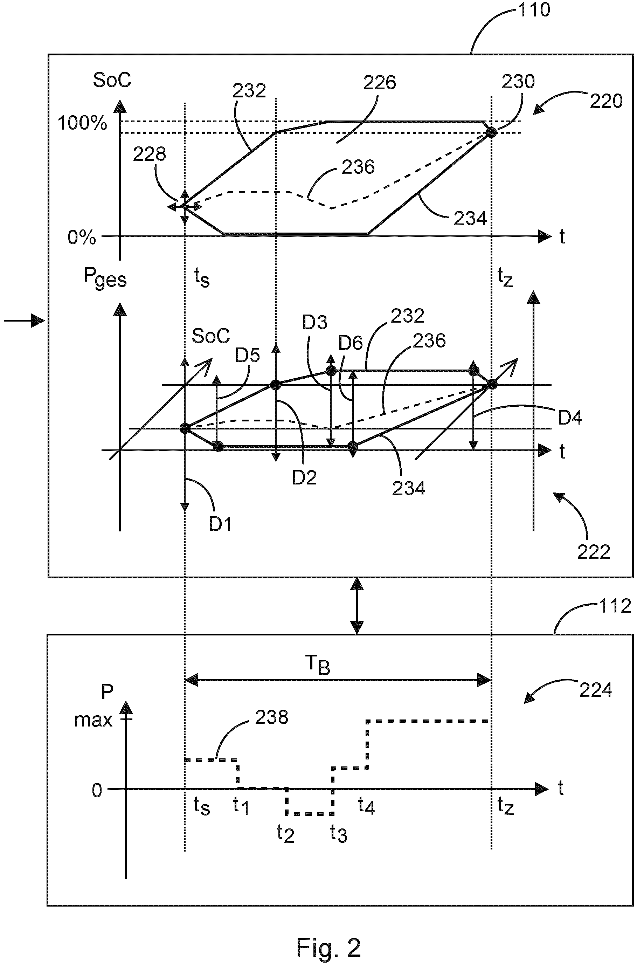

Details dazu sowie auch zu dem unteren Diagramm des Aggregationsblocks und auch zu dem unter dem Aggregationsblock 110 dargestellten Austauschleistungsblock 112 werden weiter unten zusammen mit der Figur 2 näher erläutert.

Jedenfalls kann der Aggregator, was durch das untere Diagramm im Aggregationsblock 110 veranschaulicht ist, zu unterschiedlichen Zeiten unterschiedliche Austauschleistungen und damit Austauschenergien vorgeben, was als dritte Dimension in dem Diagramm dargestellt werden kann. Solche möglichen Austauschleistungen oder Kontingente für Austauschleistungen können an den Austauschleistungsblock 112 übergeben werden. Ebenso kann der Austauschleistungsblock 112 basierend auf Verfügbarkeiten oder Angeboten im elektrischen Versorgungsnetz Austauschleistung zu unterschiedlichen Zeiten vorgeben und damit einen Verlauf der Austauschleistung vorgeben. Das ist in dem Diagramm des Austauschleistungsblocks 112 angedeutet, demnach zeitabhängig unterschiedliche Leistungsstufen vorgeschlagen werden. Der Verlauf der Austauschleistung muss allerdings nicht in Stufen verlaufen. Er könnte auch kontinuierlich verlaufen.

Eine solche Berechnung oder Vorgabe von Leistungspaketen oder-verläufen für die Austauschleistung kann in Abhängigkeit von dem Ladezustandsbereich und den Daten vorgenommen werden, die der Netzanschlussblock 108 bereitstellt bzw. die im Zusammenhang mit dem Netzanschlussblock 108 oben erläutert wurden.

Insoweit kann der Leistungsblock 112 bzw. der darin beispielhaft dargestellte Verlauf der Austauschleistung als Ergebnis oder zumindest Zwischenergebnis oder Teilergebnis des vorgeschlagenen Verfahrens verstanden werden. Aus den Daten über den Fuhrpark gemäß Fuhrparkblock 102, den Daten der Ladeinfrastruktur gemäß dem Infrastrukturblock 106, zusammen mit den Daten, die der Eingangsdatenblock 104 bereitstellt, kann ein Ladezustandsbereich bestimmt werden, insbesondere vorhergesagt werden.

Basierend auf diesem Ladezustandsbereich, der im oberen Diagramm des Aggregationsblocks 110 veranschaulicht ist, kann ein Verlauf der Austauschleistung über die Zeit bestimmt werden, vorzugsweise auch als Vorhersage. Dazu können besonders Daten über das elektrische Versorgungsnetz hinsichtlich Bedarf und Angebot verwendet werden, die aufzeigen, wann eine Austauschleistung in welcher Höhe vorteilhaft ist. Der Ladezustandsbereich bietet dafür einen Variationsbereich, der auch als Flexraum bezeichnet werden kann, und dadurch den Rahmen vorgibt, innerhalb dessen ein solcher Verlauf der Austauschleistung vorgegeben werden kann. Dabei wird die Austauschleistung so vorgegeben, dass der Summenladezustand in dem Ladezustandsbereich verbleibt.

Figur 2 zeigt einen Ausschnitt des Ablaufschemas der Figur 1, nämlich den Aggregationsblock 110 und den Austauschleistungsblock 112. Der Aggregationsblock 110 weist im oberen Bereich ein Ladezustandsdiagramm 220 auf, das einen Ladezustandsbereich illustriert. Im unteren Bereich des Aggregationsblocks 110 ist ein Variationsdiagramm 222 dargestellt, das auf dem Ladezustandsdiagramm 220 aufbaut und zusätzlich exemplarisch ein paar Variationsmöglichkeiten für Austauschleistung andeutet.

Im Austauschleistungsblock 112 ist ein Austauschleistungsdiagramm 224 dargestellt, das einen möglichen Verlauf einer Austauschleistung über die Zeit veranschaulicht also einen Austauschleistungsverlauf. Alle diese drei Diagramme, nämlich das Ladezustandsdiagramm 220, das Variationsdiagramm 222 und das Austauschleistungsdiagramm 224 weisen dieselbe Zeitachse auf. Besonders ist zur Veranschaulichung ein Startladezeitpunkt ts und ein Zielladezeitpunkt tz für den Ladezustandsbereich eingezeichnet und diese Zeitpunkte auch durch entsprechende senkrechte Linien in den übrigen beiden Diagrammen eingezeichnet. Der Startladezeitpunkt ts und der Zielladezeitpunkt tz spannen somit den Bereitstellungszeitraum T_{B} auf, der der besseren Übersichtlichkeit halber nur im Austauschleistungsblock 112 eingezeichnet ist.

In dem Ladezustandsdiagramm 220 ist grundsätzlich der Summenladezustand SoC über die Zeit t aufgetragen. In diesem Diagramm ist der Ladezustandsbereich 226 dargestellt. Der Ladezustandsbereich 226 beginnt mit einem Startladepunkt 228 und endet mit einem Zielladepunkt 230. Der Startladepunkt 228 ist gekennzeichnet durch einen Wert des Summenladezustands SoC und den Startladezeitpunkt ts. Sowohl die Höhe des Summenladezustands als auch der Startladezeitpunkt ts können variieren und werden bevorzugt durch eine Vorhersage bestimmt, wie dies im Zusammenhang mit Figur 1 und dort besonders dem Fuhrparkblock 102 im Zusammenhang mit den Daten, die der Eingangsdatenblock 104 bereitstellt, erläutert wurde.

Von dem Startladepunkt 228 verläuft dann der Summenladezustand SoC zum Zielladepunkt 230. Der Zielladepunkt 230 ist durch den Zielladezeitpunkt tz gekennzeichnet und durch den zugehörigen Wert des Summenladezustands SoC.

Während der Startladezeitpunkt ts variabel ist und davon abhängt, wann die Elektrofahrzeuge tatsächlich zurück zum Fuhrpark gekommen sind, kann der Zielladezeitpunkt tz recht genau festgelegt sein, nämlich dann, wenn die Elektrofahrzeuge losfahren, besonders morgens losfahren.

Auf welchem Verlauf der Summenladezustand SoC vom Startladepunkt 228 zum Zielladepunkt 230 geführt wird, ist vergleichsweise flexibel. Genau das wurde erkannt und dafür wird vorgeschlagen, lediglich Grenzen vorzugeben, die einen Flexraum aufspannen, die nämlich den Ladezustandsbereich 226 aufspannen. Der Ladezustandsbereich 226 weist dabei eine zeitabhängige Obergrenze 232 und eine zeitabhängige Untergrenze 234 auf. Die zeitabhängige Obergrenze 232 kann zeitweise den Wert von 100 % erreichen. Dann wären alle Elektrospeicher komplett vollgeladen. Außerdem kann die Untergrenze 234 zumindest zeitweise den unteren Wert von 0 % erreichen. Dies dient allerdings der Veranschaulichung und häufig ist es nicht ratsam, alle Speicher komplett zu entladen, weil sie dadurch Schaden nehmen können. Somit kann als Minimalwert der Untergrenze 234 auch ein anderer Wert als 0 % gewählt werden, beispielsweise 20 %. Gleiches gilt für die Obergrenze 232, für die ein Maximalwert beispielsweise statt bei 100 % bei 90 % gewählt werden kann. Dieser Minimalwert und dieser Maximalwert können auch in Abhängigkeit von entsprechenden Werten der einzelnen elektrischen Speicher gewählt werden.

Das Ladezustandsdiagramm 220 veranschaulicht somit, dass durch die Obergrenze 232 und die Untergrenze 234 ein Ladezustandsbereich 226 aufgespannt wird, in dem sich der Summenladezustand bewegen kann. Dazu ist beispielhaft ein Summenladezustandsverlauf 236 eingezeichnet.

Im Übrigen ist dem Ladezustandsdiagramm 220 auch zu entnehmen, dass sich durch eine Variation des Startladepunktes 228 auch der Ladezustandsbereich 226 verändert, zumindest in seinem Anfangsbereich in der Nähe dieses Startladepunktes 228. Entsprechend hängt auch der Ladezustandsbereich 226 von der Vorhersage des Summenladezustands SoC zu Beginn des Ladezustandsbereichs 226 ab, und er hängt auch von der Vorhersage hinsichtlich des Startladezeitpunkts ts ab.

Das Variationsdiagramm 222 beinhaltet das Ladezustandsdiagramm 220, wobei die Koordinatenachse für den Summenladezustand SoC in die Zeichenebene hineinweist. Die Zeitachse ist geblieben und es ist eine Koordinatenachse für die Leistung P hinzugekommen. Diese Leistung P zeigt in dem Variationsdiagramm 222 an, bei welchem Eckpunkt der Obergrenze 232 bzw. Untergrenze 234 wie viel Austauschleistung abgegeben bzw. aufgenommen werden kann. Dazu sind die Doppelpfeile D1 - D6 eingezeichnet.

Der Doppelpfeil D1 betrifft den Startladepunkt 228 und zeigt an, dass in dem Moment sowohl positive als auch negative Austauschleistung in gleichem Maße angeboten werden kann. Der Doppelpfeil D2 ist an der Obergrenze 232 eingezeichnet und dort kann die Austauschleistung noch erhöht werden, insbesondere kann sie aber auch noch viel stärker mit negativem Wert angeboten werden. Beim Doppelpfeil D3, und Gleiches gilt für den Doppelpfeil D4, ist die Obergrenze 232 bei ihrem Maximalwert angekommen und dann kann nur noch negative Austauschleistung angeboten werden. Bei dem Doppelpfeil D4 kommt hinzu, dass negative Austauschleistung nicht nur angeboten werden kann, sondern angeboten werden muss, um den Zielladepunkt 230 noch zu erreichen. Allerdings kann der Zielladepunkt 230 auch als Mindestwert vorgegeben sein und dann könnte der Summenladezustand auch über diesem Zielladepunkt 230 liegen und dann würde der Doppelpfeil D4 auch nur eine mögliche negative Austauschleistung andeuten. Die Austauschleistung könnte auch null sein, sie kann aber nicht positiv sein, was der Doppelpfeil D4 anzeigt.

An dieser Stelle sei wiederholt, dass eine positive Austauschleistung eine solche ist, bei der die Speicher geladen werden, eine positive Austauschleistung ist also eine solche, bei der Leistung aus dem Netz entnommen und in die elektrischen Speicher eingespeichert wird.

Die Doppelpfeile D5 und D6 zeigen jeweils an, dass nur eine positive Austauschleistung möglich ist, weil hier die Untergrenze 234 bereits den minimalen Wert erreicht hat.

Insoweit zeigen diese Doppelpfeile D1 - D6 lediglich Möglichkeiten an und helfen, einen Rahmen zu definieren, in dem die Austauschleistung dann tatsächlich variiert werden kann.

Der Summenladezustandsverlauf 236 gibt somit eine Reihe vieler Summenladezustände an. Für jeden dieser Summenladezustände, also für jeden Punkt auf dem Summenladezustandsverlauf 236, kann ein Intervall bzw. ein minimaler und ein maximaler Wert vorgegeben werden. Für jeden Wert ergibt sich dann auch ein Trend für den Summenladezustand, der zu einem Verlauf durch den Ladezustandsbereich führt, der andere Austauschleistungen ermöglicht. Ständige Veränderungen können dabei zu einem kontinuierlichen Verlauf führen. Fährt aber ein Elektrofahrzeug ab oder kommt es an, so ändert sich der Summenladezustand sprunghaft.

Es ist nun beispielhaft ein Verlauf einer Austauschleistung, also ein Austauschleistungsverlauf 238 in dem Austauschleistungsdiagramm 224 des Austauschleistungsblocks 112 dargestellt. Demnach beginnt zum Startladezeitpunkt ts die Austauschleistung und damit der Austauschleistungsverlauf 238 mit einem positiven Wert. Es wird also Leistung aus dem elektrischen Versorgungsnetz entnommen und zum Laden der Speicher verwendet.

Entsprechend steigt der Summenladezustand bzw. der Summenladezustandsverlauf 236 an. Das ist sowohl in dem Ladezustandsdiagramm 220 als auch dem Variationsdiagramm 222 zu erkennen. Zum Zeitpunkt t₁ fällt der Austauschleistungsverlauf 238 auf null ab und entsprechend weist der Summenladezustandsverlauf 236 einen waagerechten Bereich auf.

Zum Zeitpunkt t₂ ist geplant worden, also vorhergesagt worden, und wird dann noch umgesetzt, Leistung in das elektrische Versorgungsnetz einzuspeisen, weil hier ein besonders hoher Bedarf vorhergesagt wurde, der sich auch daraus ergeben kann, dass des nachts, wenn eigentlich wenig Leistung benötigt wird, ein großer Erzeuger abgeschaltet wird, sodass dennoch ein Leistungsbedarf im elektrischen Versorgungsnetz entstehen kann.

Diese negative Austauschleistung ab dem Zeitpunkt t₂ ist auch in dem Summenladezustandsverlauf 236 durch eine abfallende Flanke zu erkennen.

Zum Zeitpunkt t₃ wird die Austauschleistung wieder auf einen positiven Wert geändert und entsprechend steigt der Summenladezustand wieder an. Zum Zeitpunkt t₄ wird die Austauschleistung nochmals erhöht, sodass der Summenladezustandsverlauf 236 ab t₄ auch noch etwas steiler verläuft. Auf diese Weise werden dann schließlich alle Speicher voll geladen, wodurch der Summenladezustandsverlauf 236 den Zielladepunkt 230 erreicht.

Besonders wird vorgeschlagen, dass der Austauschleistungsverlauf 238, wie er beispielhaft in dem Austauschleistungsdiagramm 224 dargestellt ist, als Vorhersage vorherbestimmt wird. Der Netzbetreiber oder eine Netzsteuereinheit kann dann mit dieser Vorhersage arbeiten und das Netzmanagement entsprechend darauf einstellen.

Gleichwohl besteht besonders im Bereich von ts bis t₄ die Möglichkeit, *ad hoc* die Austauschleistung zu variieren, also den eigentlich vorgegebenen Austauschleistungsverlauf 238 zu verändern. Das kann beispielsweise dann geschehen, wenn unerwartet ein Leistungsbedarf oder auch ein Leistungsüberangebot im elektrischen Versorgungsnetz auftritt. Ein solches kann beispielsweise auch durch eine Veränderung der Netzfrequenz erkannt werden. So wird vorgeschlagen, dass dann, wenn die Netzfrequenz, die das elektrische Versorgungsnetz aufweist, einen vorbestimmten Grenzwert überschreitet, die Austauschleistung erhöht wird, also mehr Leistung aus dem Netz entnommen wird, und/oder dass in dem Fall, wenn die Netzfrequenz unter einen unteren Frequenzwert abfällt, die Austauschleistung verringert wird, also mehr Austauschleistung in das elektrische Versorgungsnetz eingespeist wird.

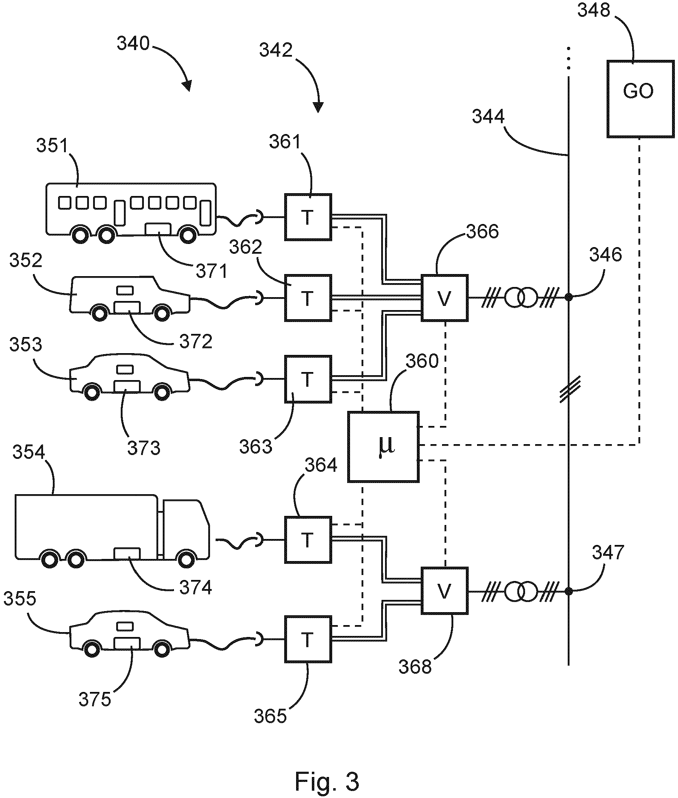

Figur 3 zeigt einen Fuhrpark 340 mit einer Ladeinfrastruktur 342, die an ein elektrisches Versorgungsnetz 344 über zwei Netzanschlusspunkte 346 und 347 angeschlossen ist. Das elektrische Versorgungsnetz verfügt über eine Netzsteuereinheit 348, die das elektrische Versorgungnetz 344 steuern kann. Die Netzsteuereinheit 348 kann auch durch einen Netzbetreiber betrieben werden.

Der Fuhrpark 340 weist exemplarisch fünf Elektrofahrzeuge 351 - 355 auf, die jeweils an eines der Ladeterminals 361 - 365 angeschlossen sind. Die Ladeterminals können über Verteilerknoten 366 bzw. 368 über jeweils einen Netzanschlusspunkt 346 bzw. 347 mit dem elektrischen Versorgungsnetz 344 verbunden sein.

Somit können die drei Elektrofahrzeuge 351 - 353 über den Netzanschlusspunkt 346 in das elektrische Versorgungsnetz 344 einspeisen bzw. daraus Leistung entnehmen und die Elektrofahrzeuge 354 und 355 über den Netzanschlusspunkt 347 Leistung in das elektrische Versorgungsnetz 344 einspeisen oder daraus entnehmen.

Gleichwohl ist eine Ladesteuereinheit 360 vorgesehen, die jedes einzelne Ladeterminal 361 - 365 und damit jeden Speicher der Elektrofahrzeuge 351 - 355 ansteuern kann. Außerdem ist als optionale Möglichkeit vorgesehen, dass die Ladesteuereinheit auch die Verteilerknoten 366 und 368 ansteuern kann. Außerdem ist vorgesehen, dass die Ladesteuereinheit 360 mit der Netzsteuereinheit 348 kommunizieren kann. Die Ladesteuereinheit 360 kann dazu Informationen an die Netzsteuereinheit 348 geben sowie Informationen von ihr erhalten.

Grundsätzlich sind die Informationsverbindungen zwischen der Ladesteuereinheit 360 einerseits und den Ladeterminals 361 - 365, den Verteilerknoten 366 und 368 sowie der Netzsteuereinheit 348 gestrichelt dargestellt. Über die übrigen Leitungen, die durchgezogen gezeichnet sind, ist eine Leistungs- bzw. Energieübertragung möglich.

Die Ladesteuereinheit 360 kann Informationen über Eigenschaften der Ladeinfrastruktur 342 gespeichert haben und/oder als aktuelle Daten empfangen. Außerdem kann sie Informationen über Eigenschaften der elektrischen Speicher der Elektrofahrzeuge 351 - 355 gespeichert haben und, insbesondere über die Ladeterminals 361 - 365, aktuelle Informationen über den Ladezustand und gegebenenfalls weitere Eigenschaften der jeweiligen Speicher der Elektrofahrzeuge 351 - 355 erhalten und verarbeiten.

Damit kann mit der Ladesteuereinheit 360 insgesamt die Austauschleistung gesteuert werden, die zwischen der Ladeinfrastruktur 342 und dem elektrischen Versorgungsnetz 344 ausgetauscht wird. Diese Austauschleistung ist insoweit die Summe der Teilaustauschleistungen, die über den Netzanschlusspunkt 346 und den Netzanschlusspunkt 347 mit dem elektrischen Versorgungsnetz 344 ausgetauscht werden.

In den Elektrofahrzeugen 351 - 355 sind zudem zum Zwecke der Veranschaulichung elektrische Speicher 371 - 375 angedeutet.

Es wird somit ein Verfahren vorgeschlagen, das die Kapazität eines Fuhrparks aus Elektrofahrzeugen vorteilhaft ausnutzt. Hierdurch können Systemdienstleistungen, besonders zum Netzstützen, bereitgestellt werden. Dafür kann eine Reserveenergie angeboten werden und es ist auch ein Arbitragegeschäft möglich, beides kann dem elektrischen Versorgungsnetz bzw. einem Netzbetreiber angeboten werden.

Das Verfahren kann im Grund auf jegliche Ladeinfrastruktur und auf Strukturen mit schnellladefähigen Gleichstromladeterminals in einem logistischen Verbundnetz angewendet werden. Es wird eine bidirektionale Ladeinfrastruktur ausgenutzt. Vorteilhafterweise kann eine Kombination mit stationären Speichern, zumindest mit einem stationären Speicher, vorgenommen werden.

Es wurde erkannt, dass eine Ladeinfrastruktur, welche jederzeit ohne Einschränkungen immer die volle Ladeleistung mit dem elektrischen Versorgungsnetz, das vereinfachend auch als Netz bezeichnet wird, austauschen kann, eine starke Überdimensionierung der Netzinfrastruktur erfordert und damit höhere Anschluss- und Netznutzungskosten hervorruft. Es wurde zudem erkannt, dass auch die Strompreisbeschaffung durch eine Verschiebung oder sogar Rückspeisung von Energie optimiert werden kann. Bei einerVerschiebung der Energie, die zum Laden der Elektrofahrzeuge verwendet wird, wird die zum Laden benötigte Energie nicht möglichst schnell abgerufen, sondern zumindest teilweise später abgerufen und damit auf diesen späteren Bereich verschoben.

Als Synergieeffekte kann besonders erreicht werden, dass durch die Kombination aus günstiger Strombeschaffung, dem Anbieten von Systemdienstleistung und einer geringeren Netzbeanspruchung, und damit geringeren Netzentgelten und gegebenenfalls geringerem Netzausbau, sich letztlich für den Betreiber der Ladeinfrastruktur geringere Energiekosten zum Betreiben der Fahrzeuge ergeben.

Somit wird besonders auch vorgeschlagen, eine klassische Ladeinfrastruktur mit einem einfachen Lastmanagement zu verbessern.

Durch die vorgeschlagene technische Lösung kann eine Strompreisminimierung durch bessere Ausnutzung der Netze und Erhöhung des kommerziellen Nutzungsgrades der speichertragenden Kraftfahrzeuge erreicht werden. Es können zusätzliche Einnahmen dadurch generiert werden, dass die mobilen Speicher der Elektrofahrzeuge für Systemdienstleistungen und ein Stromarbitragegeschäft genutzt werden, wenn diese an dem jeweiligen Ladeterminal bzw. Ladepunkt angeschlossen sind. Es wird zudem vorgeschlagen, dass die beschriebenen Vorteile auch bewertet werden unter Berücksichtigung anwendungsspezifischer Verschleißkosten. Dazu kann ein von dem jeweiligen Ladezustand und/oder von der jeweiligen Ladeleistung abhängiger Verschleißindikator ermittelt und berücksichtigt werden.

Es liegt besonders auch die Idee zugrunde, eine sinnvolle Aggregation von Ladepunkten bzw. elektrischen Speichern durchzuführen, was optional im Zusammenspiel mit weiteren lokalen Speichern oder mobilen Speichern erfolgen kann. Besonders wurde erkannt, dass elektrische Kraftfahrzeuge im öffentlichen Personennahverkehr dadurch beim Laden die Stromspeicher netzdienlich einsetzen können.

Bei der vorgeschlagenen Aggregation, die besonders im Zusammenhang mit der Figur 2 und dort besonders im Zusammenhang mit dem Aggregationsblock 110 beschrieben ist, wird eine technische Aggregation mit einem Fahrplan und einer Ladezustands- und Ankunftsprognose der Elektrofahrzeuge kombiniert. Dadurch kann ein sehr großer Anteil der Speicherkapazität mit einer hohen Verfügbarkeit für globale und lokale Systemdienstleistungen und/oder Stromarbitragegeschäfte genutzt werden.

Besonders wird vorgeschlagen, dass für die Aggregation folgende Eingangsgrößen und Rahmenbedingungen genutzt werden, nämlich die Speichergröße jedes Fahrzeugs, die auch als Akkugröße bezeichnet werden kann, lebensdauerrelevante Akkucharakteristika, ladezustandsabhängiger und leistungsabhängiger Verschleißindikator, Akkuqualität, also Speicherqualität, des Speichers des entsprechenden Elektrofahrzeugs, Eigenschaften des Ladepunktes des Elektrofahrzeugs, eine Prognose über den Ladezustand bei Ankunft des Fahrzeugs bzw. der Fahrzeuge, eine Prognose hinsichtlich des Ankunftszeitpunkts der Elektrofahrzeuge, ein Zielladezustand als Ladezustand zum Ende des Ladezustandsbereichs, wenn die Elektrofahrzeuge also wieder abfahren sollen, Abfahrtszeiten der Elektrofahrzeuge, wobei die vier letztgenannten Eingangsgrößen abhängig von einem Fahrplan berücksichtigt werden können, und eine Ladeleistung in bidirektionaler Hinsicht. Letzter Punkt beinhaltet eine Akkuleistung, bzw. Speicherleistung, und/oder eine Ladepunktleistung, berücksichtigt also Eigenschaften des elektrischen Speichers wie auch des Ladeterminals oder eines Teils der Ladeinfrastruktur.

Besonders wird vorgeschlagen, dass der Aggregator in Abhängigkeit von den genannten Rahmenbedingungen einen Flexibilitätsraum erzeugt, der insbesondere dem Ladezustandsbereich entspricht oder beinhaltet, in dem sich der Summenladezustand, die Austauschleistung und der Verschleißindikator über die Zeit entwickeln. Dieser Flexibilitätsraum bzw. Ladezustandsbereich kann auch als Band verstanden oder bezeichnet werden. Basierend auf einem solchen Band kann ein Netzbetreiber oder Stromhändler über eine Netzsteuereinheit einen optimierten Stromfahrplan vorgeben. Dieser berücksichtigt sowohl die Nutzungskosten der aggregierten Stromspeicher, also der elektrischen Speicher der Fahrzeuge, einen aktuellen Preis, insbesondere den Börsenpreis, lokale Netznutzungskosten als auch Gelegenheiten für die Bereitstellung von globalen und lokalen Systemdienstleistungen sowie Gelegenheiten für ein Stromarbitragegeschäft.

Dazu kann der Aggregator den Stromfahrplan empfangen und die einzelnen Ladepunkte, nämlich mit angeschlossenen mobilen und/oder stationären Speichern so regeln, dass der Fahrplan eingehalten wird, nämlich auch bei Abweichungen einer vorher erstellten Prognose.

Zusätzlich kann ein Netzbetreiber basierend auf dem Flexibilitätsraum auch direkt eine Systemdienstleistung anfordern oder in Anspruch nehmen, oder dem Stromhändler ein Lasttransferpotential anbieten. Es kommt auch in Betracht, dass der Netzbetreiber zeitabhängige Leistungsgrenzen vorgibt, in denen sich der Flexraum, also der Ladezustandsbereich, bewegen darf.

## Patentansprüche

1. Verfahren zum Bereitstellen elektrischer Austauschleistung (238) mehrerer Elektrofahrzeuge (351-355) eines Fuhrparks (340) aus Elektrofahrzeugen, zum Einspeisen in ein elektrisches Versorgungsnetz (344), oder Entnehmen aus dem elektrischen Versorgungsnetz (344), mittels einer Ladeinfrastruktur (342) des Fuhrparks, wobei
- eine positive Austauschleistung eine von dem Fuhrpark (340) aus dem elektrischen Versorgungsnetz (344) entnommene elektrische Leistung bezeichnet und
- eine negative Austauschleistung eine von dem Fuhrpark (340) in das elektrische Versorgungsnetz (344) eingespeiste elektrische Leistung bezeichnet, und wobei
- jedes Elektrofahrzeug (351-355) einen elektrischen Speicher (371-375) mit einem veränderlichen Ladezustand aufweist, und
- die Summe der veränderlichen Ladezustände der Elektrofahrzeuge (351-355) des Fuhrparks (340), und ggf. weiterer veränderlicher Ladezustände weiterer Speicher, einen veränderlichen Summenladezustand bildet, wobei
- für einen Bereitstellungszeitraum (T_{B}) ein Ladezustandsbereich (226) bestimmt wird, der einen Betriebsbereich aufspannt, in dem der Summenladezustand (236) liegen soll, wobei der Ladezustandsbereich (226) **gekennzeichnet ist**
- **durch** eine zeitabhängige Obergrenze (232), die zeitabhängig Maximalwerte für den Summenladezustand vorgibt, die nicht überschritten werden sollen, und
- **durch** eine zeitabhängige Untergrenze (234), die zeitabhängig Minimalwerte für den Summenladezustand vorgibt, die nicht unterschritten werden sollen, und wobei
- der Ladezustandsbereich (226) in Abhängigkeit der Ladezustände der Elektrofahrzeuge (351-355) bestimmt wird, und wobei
- in dem Bereitstellungszeitraum (T_{B}) die elektrische Austauschleistung so gesteuert wird, dass der Summenladezustand den Ladezustandsbereich nicht verlässt.

2. Verfahren nach Anspruch 1, **dadurch gekennzeichnet, dass**
- wenigstens ein Startladepunkt des Ladezustandsbereichs prognostiziert wird, der bestimmt ist durch einen Anfangsladezustand des Summenladezustandes zu einem Startzeitpunkt, wobei
- der Anfangsladezustand zu dem Startzeitpunkt (t_{S}) prognostiziert wird, und/oder
- der Startzeitpunkt (t_{S}) prognostiziert wird, insbesondere als ein prognostizierter Zeitpunkt, zu dem prognostiziert wird, dass
- alle Elektrofahrzeuge die Ladeinfrastruktur erreicht haben,
- ein vorbestimmter Teil der Elektrofahrzeige die Ladeinfrastruktur erreicht hat,
- so viele Elektrofahrzeuge die Ladeinfrastruktur erreicht haben, dass eine Summe ihrer Ladezustände einen vorgegebenen Mindestanfangswert des Summenladezustands erreicht haben und/oder
- so viele Elektrofahrzeuge die Ladeinfrastruktur erreicht haben, dass eine Summe ihrer Speicherkapazitäten eine vorgegebene Mindestspeicherkapazität aufweist.

3. Verfahren nach Anspruch 1 oder 2, **dadurch gekennzeichnet, dass**
- einem bzw. dem prognostizierten Startladepunkt des Ladezustandsbereichs eine Erwartungswahrscheinlichkeit zugeordnet wird, insbesondere
- einem bzw. dem prognostizierten Anfangsladezustand und/oder
- einem bzw. dem prognostizierten Startzeitpunkt jeweils eine Erwartungswahrscheinlichkeit zugeordnet wird, und/oder dass
- Abweichungen zwischen einem prognostizierten Anfangsladezustand und einem erfassten Summenladezustand ausgeregelt werden, und/oder, dass
- ein Wert des Startladepunktes des Ladezustandsbereichs für eine vorbestimmte Verfügbarkeit als Verfügbarkeitswert prognostiziert wird, insbesondere, dass ein Wert des Anfangsladezustands oder des Startzeitpunktes als Verfügbarkeitswert prognostiziert wird, insbesondere, dass als Verfügbarkeitswert ein p50-Wert, ein p90-Wert, ein p95-Wert, ein p98-Wert oder ein p99,98-Wert verwendet wird.

4. Verfahren nach einem der vorstehenden Ansprüche, **dadurch gekennzeichnet, dass**
- ausgehend von einem bzw. dem Anfangswert des Summenladezustandes (236) als Anfangsladezustand zu einem bzw. dem Startzeitpunkt (ts), und
- ausgehend von einem Mindestwert, der für den Summenladezustand für einen Zielzeitpunkt (t_{Z}) vorgegeben wird,
die Austauschleistung (238) so gesteuert wird, dass der Summenladezustand (236) den Ladezustandsbereich (226) nicht verlässt, während der Summenladezustand
- über den Bereitstellungszeitraum (T_{B}) oder einen Teil davon,
- beginnend vom Startzeitpunkt (t_{S}), den Anfangswert aufweisend,
- zum Zielzeitpunkt (t_{Z}) den Mindestwert erreicht oder überschreitet.

5. Verfahren nach einem der vorstehenden Ansprüche, **dadurch gekennzeichnet, dass**
- zum Einstellen der Austauschleistung (238) der Ladezustandsbereich (226), oder ein Teil davon, als Variationsbereich angeboten wird, und abhängig von dem Variationsbereich eine Austauschvorschrift bestimmt wird, die einen Rahmen für das Einstellen der Austauschleistung (238) so vorgibt, dass der Ladezustand den Variationsbereich nicht verlässt,
- wobei optional die Austauschvorschrift für die Austauschleistung (238) wenigstens eine weitere Bedingung für das Erstellen der Austauschleistung aufweist aus der Liste aufweisend:
- Maximalwerte für die Austauschleistung,
- Minimalwerte für die Austauschleistung,
- maximale Änderungen der Austauschleistung und
- minimale Änderungen der Austauschleistung,
und/oder
- die Austauschleistung (238) abhängig von dem Ladezustandsbereich und/oder abhängig von dem Summenladezustand und/oder abhängig von einem prognostizierten Summenladezustand bestimmt wird, und/oder dass
- in Abhängigkeit von dem Ladezustandsbereich (226) wenigstens eine Angebotsleistung als Bereich für die Austauschleistung für einen Angebotszeitbereich, der innerhalb des Bereitstellungszeitraumes (T_{B}) liegt, angeboten wird, in dem die Austauschleistung (238) variiert werden kann, wobei insbesondere
- die Angebotsleistung wenigstens als ein Leistungskontingent für wenigstens einen Angebotszeitabschnitt innerhalb des Bereitstellungszeitraums (T_{B}) angeboten wird, und/oder dass
- ein Netzbetreiber (348) des elektrischen Versorgungsnetzes (344) oder eine Netzsteuereinheit zum Steuern des elektrischen Versorgungsnetzes (344) die Austauschleistung (238) in Abhängigkeit von dem Variationsbereich und/oder von der Angebotsleistung vorgibt.

6. Verfahren nach einem der vorstehenden Ansprüche, **dadurch gekennzeichnet, dass**
- in Abhängigkeit von dem Ladezustandsbereich (226), abschnittsweise oder vollständig für den Bereitstellungszeitraum (T_{B}),
- ein zeitlicher Verlauf des Summenladezustands (236) vorgegeben wird, und/oder
- ein zeitlicher Verlauf der Austauschleistung (238) vorgegeben wird.

7. Verfahren nach einem der vorstehenden Ansprüche, **dadurch gekennzeichnet, dass**
- der Ladezustandsbereich (226) an einen bzw. den Netzbetreiber (348) des elektrischen Versorgungsnetzes oder an eine bzw. die Netzsteuereinheit zum Steuern des elektrischen Versorgungsnetzes (344) oder eines Abschnitts davon, übertragen wird, und insbesondere
- der Netzbetreiber (348) bzw. die Netzsteuereinheit in Abhängigkeit von dem Ladezustandsbereich (226)
- den Summenladezustand (236) vorgibt, insbesondere einen bzw. den zeitlichen Verlauf des Summenladezustands (236), und/oder
- die Austauschleistung (238) vorgibt, insbesondere einen bzw. den zeitlichen Verlauf der Austauschleistung (238) vorgibt.

8. Verfahren nach einem der vorstehenden Ansprüche, **dadurch gekennzeichnet, dass**
- der Summenladezustand (236), zumindest teilweise, als Vorhersage bestimmt wird,
- und insbesondere der Ladezustandsbereich (226) in Abhängigkeit von dem so bestimmten Summenladezustand (236) zumindest teilweise als Vorhersage bestimmt wird, wobei
- die Bestimmung des Summenladezustandes (236) zyklisch, insbesondere tageweise, wiederholt wird, so dass einem aktuell bestimmten Summenladezustand (236) wenigstens ein vorheriger Summenladezustand (236) vorausgeht, und wobei der jeweils aktuell bestimmte Summenladezustand (236) in Abhängigkeit von wenigstens einem der vorherigen Summenladezustände (236) abhängt.

9. Verfahren nach einem der vorstehenden Ansprüche, **dadurch gekennzeichnet, dass**
- die Austauschleistung (238) und/oder der Summenladezustand (236) in Abhängigkeit von wenigstens einer Steuerrandbedingung gesteuert werden, aus der Liste aufweisend:
- Nutzungskosten, die ein Kostenmaß für die Benutzung der elektrischen Speicher (371-375) definieren, und
- einen Bedarf an wenigstens einer Systemdienstleistung zum elektrischen Stützen des elektrischen Versorgungsnetzes (344).

10. Verfahren nach einem der vorstehenden Ansprüche, **dadurch gekennzeichnet, dass** zusätzlich zu den elektrischen Speichern (371-375) der Elektrofahrzeuge (351-355)
- wenigstens ein stationärer elektrischer Speicher mit verwendet wird, der jeweils einen veränderlichen Ladezustand aufweist und
- der veränderliche Summenladezustand (236) aus der Summe der veränderlichen Ladezustände der Elektrofahrzeuge des Fuhrparks und dem wenigstens einen veränderlichen Ladezustand des wenigstens einen stationären elektrischen Speichers gebildet wird.

11. Verfahren nach einem der vorstehenden Ansprüche, **dadurch gekennzeichnet, dass**
- die Ladeinfrastruktur (342)
- mehrere Ladeterminals (361-365) aufweist, jeweils zum Laden und Entladen eines Speichers (371-375) eines Elektrofahrzeugs (351-355),
- wobei optional die Ladeterminals (361-365) örtlich verteilt sind und die Ladeinfrastruktur (342) über mehrere Netzanschlusspunkte (346, 347) mit dem elektrischen Versorgungsnetz (344) verbunden ist, und
- wobei die Ladeinfrastruktur (342)
- eine Ladesteuereinheit (360) aufweist, zum Steuern des Ladens und Entladens der einzelnen Speicher der Elektrofahrzeuge, wobei das Steuern des Ladens bzw. Entladens
- basierend auf einem bzw. dem in Abhängigkeit vom Ladezustandsbereich (226) vorgegebenen zeitlichen Verlauf des Summenladezustands (236) durchgeführt wird, und/oder
- basierend auf einem bzw. dem in Abhängigkeit vom Ladezustandsbereich (226) vorgegebenen zeitlichen Verlauf der Austauschleistung (238) durchgeführt wird.

12. Verfahren nach einem der vorstehenden Ansprüche, **dadurch gekennzeichnet, dass**
- eine bzw. die Ladesteuereinheit (360) der Ladeinfrastruktur (342) in Abhängigkeit prognostizierter Ladezustände der elektrischen Speicher (371-375) der Elektrofahrzeuge (351-355) und optional in Abhängigkeit wenigstens jeweils einer weiteren Eigenschaft der elektrischen Speicher den Ladezustandsbereich für den Bereitstellungszeitraum (T_{B}) bestimmt, wobei der Bereitstellungszeitraum dabei in der Zukunft liegt,
- der Ladezustandsbereich (226), ein bzw. der Variationsbereich, und/oder eine bzw. die Austauschvorschrift an einen bzw. den Netzbetreiber (348) oder eine bzw. die Netzsteuereinheit übertragen wird,
- der Netzbetreiber (348) bzw. die Netzsteuereinheit in Abhängigkeit von dem Ladezustandsbereich (266), dem Variationsbereich bzw. der Austauschvorschrift die Austauschleistung (238) für den Bereitstellungszeitraum als zeitlichen Ablauf vorgibt, insbesondere als Vorhersage,
- die Ladesteuereinheit (360) die Austauschleistung (238) in dem Bereitstellungszeitraum gemäß dem vorgegebenen zeitlichen Ablauf steuert, indem einzelne Ladeterminals (361-365) bzw. die einzelnen Ladeterminals entsprechend angesteuert werden, wobei optional
- in Abhängigkeit von dem Ladezustandsbereich (226), dem Variationsbereich und/oder der Austauschvorschrift und dem Summenladezustand (236) dem elektrischen Versorgungsnetz (344) zusätzliche Wirk- und/oder Blindleistung zur Regelung des elektrischen Versorgungsnetzes angeboten wird.

13. Verfahren nach einem der vorstehenden Ansprüche, **dadurch gekennzeichnet, dass**
eine bzw. die Ladesteuereinheit (360) die einzelnen Speicher (371-375) der Elektrofahrzeuge (351-355) und optional wenigstens einen stationären Speicher in Abhängigkeit von wenigstens einer Steuerrandbedingung ansteuert, ausgewählt aus der Liste aufweisend:
- jeweils eine Speichergröße des jeweiligen Speichers,
- jeweils eine Lade- und Entladecharakteristik des Speichers, die insbesondere einen Zusammenhang zwischen Lade- und Entladezyklen einerseits und einer zu erwartenden Lebensdauer andererseits wiedergibt,
- einen Verschleißindikator, der jeweils abhängig von durchgeführten Lade- und Entladezyklen und/oder abhängig von einem zeitlichen Verlauf des jeweiligen Ladezustandes, einen Verschleiß des Speichers quantifiziert,
- jeweils eine Speicherqualität des jeweiligen Speichers,
- jeweils einen Ort eines Ladeterminals (Ladepunkt), an dem der betreffende Speicher geladen wird,
- jeweils eine Prognose über einen Verlauf oder Endwert des Ladezustandes jeweils eines Speichers während einer Benutzung des betreffenden Elektrofahrzeugs außerhalb der Ladestation, insbesondere in Abhängigkeit von einem Fahrplan des Elektrofahrzeugs,
- jeweils eine Prognose über eine Ankunftszeit jeweils eines Elektrofahrzeugs nach einer Benutzung des betreffenden Elektrofahrzeugs außerhalb der Ladestation, insbesondere in Abhängigkeit von einem Fahrplan des Elektrofahrzeugs,
- jeweils eine Prognose oder Vorgabe über einen Ladezustand des elektrischen Speichers zu einem Ende des Bereitstellungszeitraumes,
- jeweils eine Abfahrtzeit eines Elektrofahrzeugs, die die Zeit angibt, zu der das betreffende Elektrofahrzeug die Ladestation verlässt, wobei die Abfahrtszeit vorzugsweise einen für das betreffende Elektrofahrzeug relevanten Fahrplan verwendet,
- jeweils eine Ladeleistung eines Speichers, die die Leistung bezeichnet, die der Speicher innerhalb des Bereitstellungszeitraumes abgegeben und aufgenommen hat, und
- jeweils eine Historie über Ladezyklen eines Speichers, die der bisher durchgeführt hat.

14. Ladeinfrastruktur (342) für mehrere Elektrofahrzeuge (351-355) eines Fuhrparks (340) zum Bereitstellen elektrischer Austauschleistung (238) der Elektrofahrzeuge (351-355) zum Einspeisen in ein elektrisches Versorgungsnetz (344), oder Entnehmen aus dem elektrischen Versorgungsnetz (344), wobei
- eine positive Austauschleistung eine von dem Fuhrpark (340) aus dem elektrischen Versorgungsnetz (344) entnommene elektrische Leistung bezeichnet und
- eine negative Austauschleistung eine von dem Fuhrpark (340) in das elektrische Versorgungsnetz (344) eingespeiste elektrische Leistung bezeichnet, und wobei
- jedes Elektrofahrzeug (351-355) einen elektrischen Speicher (371-375) mit einem veränderlichen Ladezustand aufweist, und für jedes Elektrofahrzeug (351-355) ein Ladeterminal (361-365) vorgesehen ist, um den Speicher (371-375) des Elektrofahrzeugs (351-355) zu laden, oder zu entladen, und
- die Summe der veränderlichen Ladezustände der Elektrofahrzeuge des Fuhrparks, und ggf. weiterer veränderlicher Ladezustände weiterer Speicher, einen veränderlichen Summenladezustand (236) bildet, wobei
- eine Ladesteuereinheit (360) vorgesehen ist, die die Ladeterminals (361-365) ansteuert, und für einen Bereitstellungszeitraum (T_{B}) einen Ladezustandsbereich (226) bestimmt, der einen Betriebsbereich aufspannt, in dem der Summenladezustand (236) liegen soll, wobei der Ladezustandsbereich (226) **gekennzeichnet ist,**
- **durch** eine zeitabhängige Obergrenze (232), die zeitabhängig Maximalwerte für den Summenladezustand (236) vorgibt, die nicht überschritten werden sollen, und
- **durch** eine zeitabhängige Untergrenze (234), die zeitabhängig Minimalwerte für den Summenladezustand (236) vorgibt, die nicht unterschritten werden sollen, und wobei
- die Ladesteuereinheit (360) den Ladezustandsbereich (226) in Abhängigkeit der Ladezustände der Elektrofahrzeuge (351-355) bestimmt wird, und wobei
- die Ladeinfrastruktur (342), insbesondere die Ladesteuereinheit (360) in dem Bereitstellungszeitraum (T_{B}) die elektrische Austauschleistung so steuert, dass der Summenladezustand (236) den Ladezustandsbereich (226) nicht verlässt.

15. Ladeinfrastruktur (342) nach Anspruch 14, **dadurch gekennzeichnet, dass** das Bereitstellen der Austauschleistung (238) gemäß einem Verfahren nach einem der Ansprüche 1 bis 13 durchgeführt wird, insbesondere mittels der Ladesteuereinheit (360).
